# EUROPEAN PATENT APPLICATION

(11) **EP 1 593 715 A1**
(43) Date of publication of application: **09.11.2005**
(21) Application number: 03786370.1
(22) Date of filing: 26.12.2003
(51) Int. Cl.: C09C 1/56, C09C 3/10, C09D 11/00, B41J 2/01

(54) **DISPERSE COLOR MATERIAL AND PROCESS FOR PRODUCING THE SAME, WATER-COLOR INK EMPLOYING IT, INK TANK, INKJET RECORDER, INKJET RECORDING METHOD AND INKJET RECORDED IMAGE**

(30) Priority: 27.12.2002 JP 2002382951; 26.02.2003 JP 2003049212; 18.04.2003 JP 2003114956; 24.12.2003 JP 2003428400
(71) Applicant: CANON KABUSHIKI KAISHA, Ohta-ku Tokyo 146-8501 (JP)
(72) Inventor: ICHINOSE, Yoko c/o CANON KABUSHIKI KAISHA, Ohta-ku, Tokyo 146-8501 (JP); MIYAGAWA, Masashi c/o CANON KABUSHIKI KAISHA, Ohta-ku, Tokyo 146-8501 (JP); ICHINOSE, Hirofumi c/o CANON KABUSHIKI KAISHA, Ohta-ku, Tokyo 146-8501 (JP); TSUJI, Itaru c/o CANON KABUSHIKI KAISHA, Ohta-ku, Tokyo 146-8501 (JP); SAKAI, Junichi c/o CANON KABUSHIKI KAISHA, Ohta-ku, Tokyo 146-8501 (JP); NAKAJIMA, Yoshio c/o CANON KABUSHIKI KAISHA, Ohta-ku, Tokyo 146-8501 (JP)
(74) Representative: TBK-Patent
(86) International application number: PCT/JP2003/016949
(87) International publication number: WO 2004/061016

(57) **Abstract**

The present invention provides a dispersible colorant having a sufficiently high dispersion stability with a high functional group density on the surface and a resin component present on the surface, the resin component not separating from the surface, and a method for simply producing the same. The present invention also provides an aqueous ink containing the excellent, dispersible colorant, ink tank, ink jet recorder, ink jet recording method and inkjet recorded images. The dispersible colorant comprises a colorant and chargeable resin pseudo fine particles having a smaller size than the colorant, and the colorant and particles are fixed to each other.

## Description

### TECHNICAL FIELD

The present invention relates to a dispersible colorant and a method for producing the same, and an aqueous ink for ink jet recording, an ink jet recorder, an ink jet recording method and an inkjet recorded image using the same.

### BACKGROUND ART

Ink jet recording adopts a varying working principle to produce images, letters or the like by ejecting fine ink droplets from nozzles onto a recording medium (paper or the like). It has been rapidly spreading in various areas for their advantages, e.g., high speed, low noise, capacity of easily producing multi-color images, high flexibility of the recorded patterns, and development/fixation not needed. In particular, the full-color jet recording techniques with an aqueous ink have recently made remarkable progress, and can now produce multi-color images which are by no means inferior to those by the conventional printing method or photography. It has been widely penetrating into the full-color image recording area, because of its capacity for producing images at a lower cost than the conventional printing method or photography, when the number of copies is limited.

The ink jet recorder and recording method with an aqueous ink have been improving to satisfy the requirements for improved recording characteristics, e.g., higher speed, finer images and full-color images. In general, the ink jet recording ink for an ink jet recorder is required to satisfy the following characteristics; (1) the images are of high resolution and high density, free of bleeding or fogging, (2) the ink is ejected without being dried at the nozzle ends to prevent clogging there while keeping good eject response and stability, (3) the ink can be well fixed on paper, (4) the images are highly durable (i.e., resistant to weather, water or the like), and (5) the images are stable for extended periods. Especially, ink that is dried and fixed rapidly and provides printing of high image-quality when printed even on plain printing paper such as copy paper is being required with a recent increase in printing speed.

Colorants for ink jet recording with an aqueous ink are mainly composed of a dye or pigment. Water-soluble dyes have been mainly used for their handleability and color developing capacity. More recently, however, essentially water-insoluble colorants, pigments in particular, have been extensively developed for aqueous inks which can realize higher weather and water resistance of the images produced by ink jet recording. For a water-insoluble colorant, pigment in particular, to be used for aqueous inks for ink jet printing, it should be stably dispersible in water. High dispersion stability of water-insoluble colorants has been generally achieved with the aid of a surfactant or polymeric dispersant (hereinafter referred to as dispersing resin). The other methods for obtaining dispersion stability of water-insoluble colorants include chemical modification of their surfaces (e.g., Japanese Patent Application Laid-Open No. H10-195360). On the other hand, a microcapsule type pigment, i.e., pigment coated with a resin, has been proposed (e.g., Japanese Patent Application Laid-Open Nos. H8-183920 and 2000-34770). Japanese Patent Application Laid-Open No. 2000-34770 discloses "an aqueous dispersion of fine, colored particles which is polymerized in the presence of vinyl monomer, after it is incorporated with a water-insoluble colorant dispersed in an aqueous medium with the aid of a dispersant, wherein it exhibits dispersion stability when the dispersant helps to disperse the water-insoluble colorant, and, when the vinyl monomer is polymerized only in the presence of the dispersant, the resulting latex lacks stability," and discusses that "the dispersion of water-insoluble colorant can be prepared by emulsion polymerization in a high yield without causing agglomeration of the fine, dispersed, coated particles of pigment, because affinity of the dispersant for the vinyl monomer and polymer thereof is not so high with the result that it is separated from the pigment particle surfaces to a limited extent and the polymerization proceeds on the dispersant-adsorbed pigment particle surfaces." The inventor discusses that an ink for ink jet recording was obtained, which is excellent in dispersion stability and printing characteristics, showing little metallic gloss, and excellent in resistance to water, light and scratching irrespective of the paper type.

### DISCLOSURE OF THE INVENTION

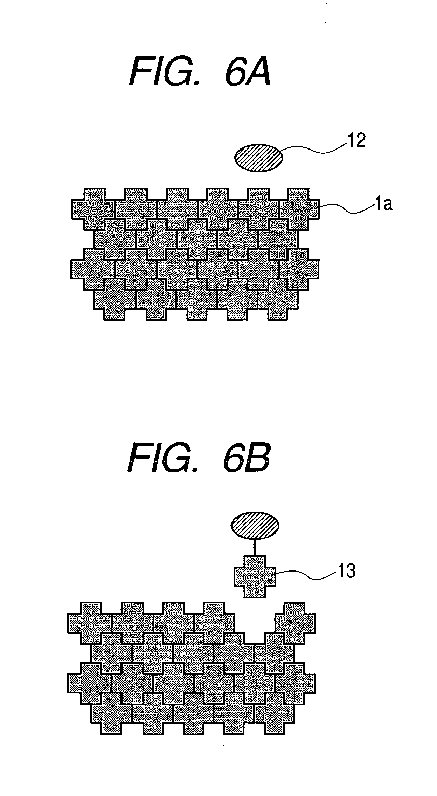

These techniques, however, cannot always satisfy dispersion stability and storage stability for extended periods simultaneously and sufficiently. The inventors of the present invention consider that a colorant should have a functional group at a high density on the surface to be stably dispersed in an ink. In the conventional procedures which use a polymeric dispersant and the procedure disclosed by Japanese Patent Application Laid-Open No. H8-183920 which uses a resin-coated pigment, increasing acid value of the resin for increased dispersion stability sometimes fails to secure ink storage stability for extended periods, because it is accompanied by increased hydrophilicity of the resin and tends to cause desorption of the resin from the colorant with a lapse of time. On the other hand, surface modification of a water-insoluble colorant by chemical procedure disclosed by Japanese Patent Application Laid-Open No. H10-195360 involves problems. For example, the modifiable functional groups and their density are limited. Direct chemical modification, in particular when the colorant is an organic pigment, may bond the hydrophilic group 12 to the pigment molecules, which are originally water-insoluble and crystallized, to transform them into the hydrophilic pigment molecules 13, which are separated from the original pigment molecules to significantly change the hue, a phenomenon known as pigment exfoliation (refer to FIGS. 6A and 6B). Therefore, these conventional techniques are not fully developed to sufficiently satisfy the recent requirements.

It is an object of the present invention to provide a dispersible colorant sufficiently high in dispersion stability, showing no separation of a resin component from a colorant and stable for extended periods by solving the problems involved in the conventional techniques. It is another object to provide a method for simply producing the same. The other objects are to provide an aqueous ink containing the excellent, dispersible colorant for ink jet recording, ink tank, ink jet recorder, ink jet recording method and inkjet recorded images.

The inventors of the present invention have developed, after having extensively studied to solve the above problems, a novel, dispersible colorant having a novel shape which can keep high dispersion stability essentially in the absence of a surfactant or polymeric dispersant, and the resin component first adsorbed on the colorant to secure storage stability for extended periods. They have also developed an aqueous ink for ink jet recording having sufficient ejection stability and dispersion stability for ink jet recording purposes, and giving printed matter of high image quality and durability by incorporating the dispersible colorant therein. More specifically, the objects of the present invention can be achieved by the following means.
1. A dispersible colorant comprising a colorant and chargeable resin pseudo fine particles having a smaller size than the colorant, wherein the colorant and particles fix to each other.
2. A dispersible colorant comprising a colorant and chargeable resin pseudo fine particles having a smaller size than the colorant, wherein a plurality of the particles are distributed on and fix to the colorant.
3. The dispersible colorant according to 1 or 2 which has a surface functional group density of not less than 250 µmols/g and less than 1000 µmols/g.
4. The dispersible colorant according to any of 1 to 3 which has a surface energy of 70 mJ/m² or less.
5. The dispersible colorant according to any of 1 to 4, wherein a copolymer component composing the chargeable resin pseudo fine particles has a glass transition temperature of not less than -40°C and not more than 60°C.
6. The dispersible colorant according to any of 1 to 5, wherein the chargeable resin pseudo fine particles contain a copolymer of monomer components containing at least one type of hydrophobic monomer and at least one type of hydrophilic monomer.
7. The dispersible colorant according to 6, wherein the hydrophobic monomer contains at least a monomer having a methyl group at the α position and a radically polymerizable, unsaturated double bond.
8. The dispersible colorant according to 6 or 7, wherein the hydrophobic monomer contains at least a (meth)acrylic ester compound.
9. The dispersible colorant according to 8, wherein the hydrophobic monomer contains at least one compound selected from the group consisting of benzyl methacrylate and methyl methacrylate.
10. The dispersible colorant according to any of 6 to 9, wherein the hydrophilic monomer contains at least an anionic monomer.
11. The dispersible colorant according to 10, wherein the anionic monomer contains at least one compound selected from the group consisting of acrylic acid, methacrylic acid and p-styrene sulfonate salts.
12. The colorant according to any of 6 to 9, wherein at least a cationic monomer is contained as the hydrophilic monomer.
13. A method for producing a dispersible colorant, comprising the step of conducting an aqueous deposition polymerization process of a radically polymerizable monomer in an aqueous dispersion of a water-insoluble colorant using an aqueous radical-polymerization initiator to integrate the water-insolube colorant with chargeable resin pseudo fine particles.
14. A method for producing a dispersible colorant, comprising the steps of (1) conducting an aqueous deposition polymerization process of a radically polymerizable polymer in an aqueous dispersion of a water-insoluble colorant using an aqueous radical-polymerization initiator to integrate the water-insoluble colorant with chargeable resin pseudo fine particles; and

### (2) purifying the product.

15. The method for producing a dispersible colorant according to 13 or 14, wherein the aqueous dispersion of the water-insoluble colorant is an aqueous solution containing a pigment dispersed with a polymeric dispersant having an acid value of not less than 100 and not more than 250.
16. The method for producing a dispersible colorant according to 15, wherein the dispersant is a copolymer of monomer components containing at least one type of monomer selected from the group consisting of acrylic acid, and methacrylic acid and a styrene monomer.
17. The method for producing a dispersible colorant according to 15 or 16, wherein the aqueous radical-polymerization initiator is anionic or ampholytic.
18. The method for producing a dispersible colorant according to 13 or 14, wherein the aqueous dispersion of the water-insoluble colorant is an aqueous solution containing a pigment dispersed with a polymeric dispersant having an amine value of not less than 150 and not more than 300.
19. The method for producing a dispersible colorant according to 18, wherein the aqueous radical-polymerization initiator is cationic or ampholytic.
20. The method for producing a dispersible colorant according to any of 13 to 19, wherein the radically polymerizable monomer component is dropped in the polymerization system.
21. The method for producing a dispersible colorant according to any of 13 to 20, wherein the radically polymerizable monomer component contains at least one type of hydrophobic monomer and at least one type of hydrophilic monomer.
22. The method for producing a dispersible colorant according to any of 13 to 21, wherein the radical-polymerization initiator is an aqueous azo-based polymerization initiator.
23. A dispersible colorant produced by the method according to any of 13 to 22.
24. An aqueous ink containing the dispersible colorant according to any of 1 to 12 and 23.
25. An aqueous ink containing a dispersible colorant comprising a colorant and chargeable resin pseudo fine particles having a smaller size than the colorant, wherein the colorant and particles fix to each other, and at least one type of self-dispersible resin fine particles are additionally contained.
26. The aqueous ink according to 25, wherein the resin component which constitutes the pseudo-fine, chargeable particles and the resin component which constitutes the at least one type of self-dispersible resin fine particles contain a polymerization product of a mixture containing at least one type of common monomer component.
27. The aqueous ink according to 26, wherein the resin component which constitutes at least one type of the pseudo-fine, chargeable particles and the resin component which constitutes the at least one type of self-dispersible resin fine particles contain a polymerization product of a mixture containing at least one type of common monomer component.
28. An aqueous ink containing a dispersible colorant comprising a colorant and negtively chargeable resin pseudo fine particles having a smaller size than the colorant, wherein the colorant and the particles fix to each other, and the dispersible colorant has an average surface zeta potential of not less than -80 mV and not more than -15 mV in an aqueous medium which compose the aqueous ink and a surface zeta potential distribution of less than 50 in terms of the standard deviation.
29. An aqueous ink containing a dispersible colorant comprising a colorant and pseudo-fine, positively chargeable particles of resin having a smaller size than the colorant, wherein the colorant and the particles fix to each other, and the dispersible colorant has an average surface zeta potential of not less than +10 mV and not more than +60 mV in an aqueous medium which composes the aqueous ink and a surface zeta potential distribution of less than 50 in terms of the standard deviation.
30. The aqueous ink according to any of 24 to 29, wherein the colorant which composes the dispersible colorant is a pigment, and the ratio of the total resin components to the pigment (resin/pigment or B/P by mass) of not less than 0.3 and not more than 4.0.
31. An ink tank which contains the aqueous ink according to any of 24 to 30.
32. An ink jet recorder for forming images with the ink according to any of 24 to 30.
33. An ink jet recording method for forming images with the aqueous ink according to any of 24 to 30 by an ink jet recorder.
34. An image formed by ink jet recording with the aqueous ink according to any of 24 to 30 using an ink jet recorder.

The present invention provides a dispersible colorant which is sufficiently high in dispersion stability with a functional group on the surface at a high density, carries a resin component on the surface and shows little tendency of separation from the surface, and also provides a method for simply producing the dispersible colorant.

The present invention also provides a dispersible colorant having other advantages, e.g., fast drying properties on the recording medium, high resistance to scratching on the recording medium, and excellent ejecting characteristics exhibited in an ink jet recorder.

Still other advantages of the dispersible colorant of the present invention are high color-developing properties and stable serviceability in a high to medium or medium to low pH range. The present invention also provides a method for simply producing the dispersible colorant, which is still another advantage of the present invention.

The present invention also provides an aqueous ink highly glossy on a glossy recording medium, highly resistant to scratching on a glossy recording medium, and excellent in storage stability for extended periods, which are still other advantages of the present invention.

The present invention provides an aqueous ink having sufficient ejection stability and dispersion stability for ink jet recording purposes, and giving printed matter of high image quality and durability by incorporating the dispersible colorant therein, and also provides an ink tank, ink jet recorder, ink jet recording method and inkjet recorded image using the aqueous ink.

### BRIEF DESCRIPTION OF THE DRAWINGS

FIGS. 1A and 1B schematically illustrate the basic structure of a dispersible colorant of the present invention having the chargeable resin pseudo fine particles attached thereto.
Each of FIGS. 2A, 2B, 2C and 2D illustrates a representative step of the method of the present invention.
FIG. 3 schematically illustrates a step for formation of the chargeable resin pseudo fine particles and another step for fixing these particles to a colorant for the method of the present invention.
FIG. 4 shows the enlarged chargeable resin pseudo fine particles for the present invention, viewed from the interface in which they fix to the colorant.
FIG. 5 shows the enlarged interface in which the pseudo-fine, chargeable particle of resin fix to the colorant for the present invention.
FIGS. 6A and 6B schematically show the pigment detachment phenomenon occurring when an organic pigment is modified with a hydrophilic group as shown in Japanese Patent Application Laid-Open No. H10-195360.
FIGS. 7A, 7B and 7C schematically show agglomerated conditions of a dispersible colorant on a recording medium.

### BEST MODE FOR CARRYING OUT THE INVENTION

The present invention will be described in more detail by the embodiments considered to be the best modes. The term "dispersible colorant" used in this specification means the colorant which is dispersible in water or aqueous ink medium essentially in the absence of surfactants or polymeric dispersants, i.e., self-dispersible colorant.

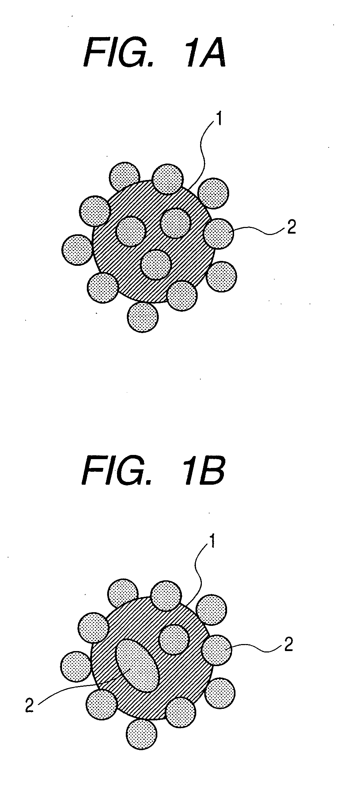

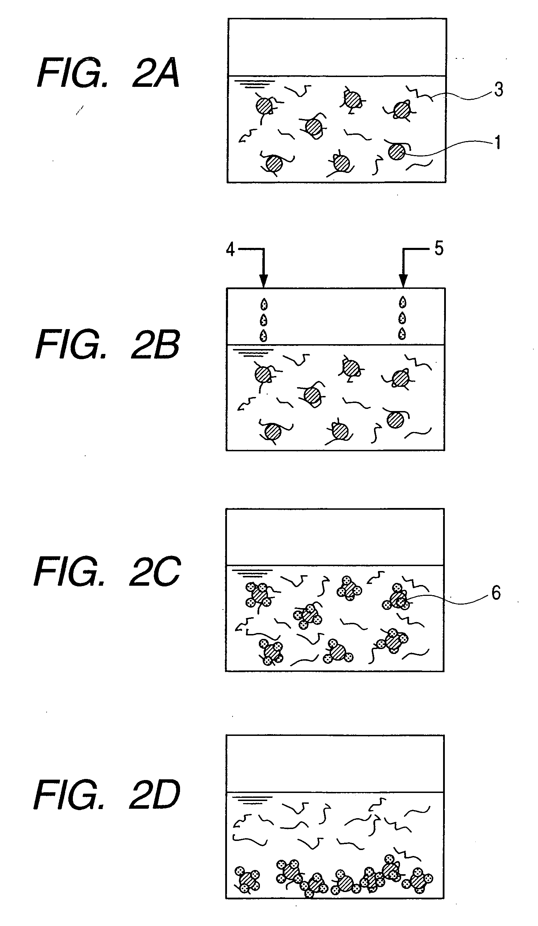

A first mode of the present invention is a dispersible colorant comprising a colorant and chargeable resin pseudo fine particles, wherein the colorant has the particles fixed thereto. FIGS. 1A and 1B schematically illustrate the colorant 1 to which the particles 2 fix the feature of the present invention. FIG. 2B schematically illustrates the chargeable resin pseudo fine particles 2 fix to the colorant 1 surface while being partly fused at the portion 2'.

The colorant is provided with a charge given by the chargeable resin pseudo fine particles fixing to its surface to become dispersible in water or aqueous ink mediums. Thus, the dispersible colorant is produced. At the same time, it exhibits high adhesion to a recording medium due to the presence of the resin component fixing to its surface. Moreover, the dispersible colorant of the present invention exhibits high storage stability for extended periods, because the chargeable resin pseudo fine particles fixing to the colorant surface, not by mere physical adsorption of the resin component, which is the feature of the dispersible colorant of the present invention, are rarely separated from the surface.

The chargeable resin pseudo fine particles for the present invention constitute a resin agglomerate in which the resin components are strongly agglomerated with each other, preferably having many physical crosslinks inside (resin agglomerate is composed of a resin component stably present in the form of fine particles, which may be agglomerated into still fine particles). The chargeable resin pseudo fine particles will be described in detail later.

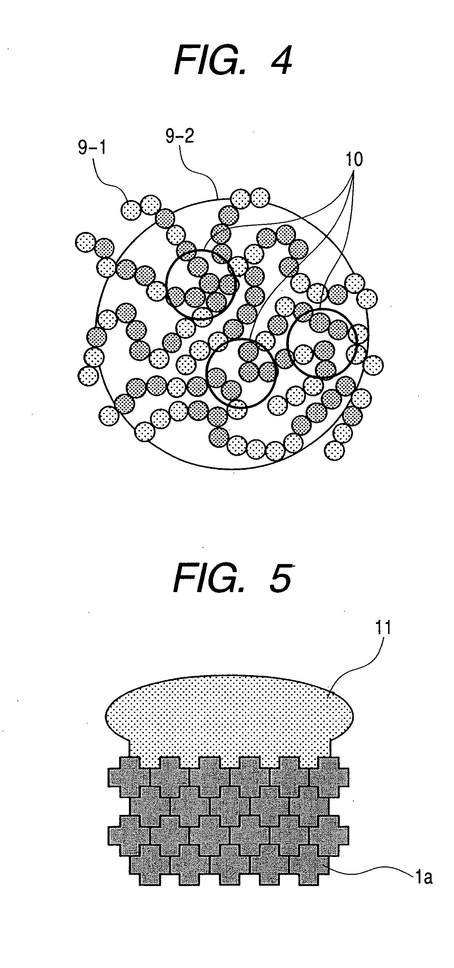

The chargeable resin pseudo fine particles fix to the colorant for the present invention by strong interactions between them. This is considered to be achieved by the following phenomenon. FIG. 4 schematically shows the enlarged interface at which the pseudo-fine, chargeable particles come into contact with the colorant. It should be noted first that the chargeable resin pseudo fine particles are formed by a polymer, composed of varying monomer unit compositions, entwined with each other. The polymer locally takes diversified structure in the interface with the colorant, and hence has surface energy widely distributed locally. The colorant and polymer are firmly bound to each other locally where their surface energies, determined by the chemical and surface structure, coincide with each other (dark circles in FIG. 4). There are a plurality of sites at which they coincide with each other in the interface (the sites 10 in FIG. 4). It is considered that the particles fix to the colorant at these sites by strong interactions according to the present invention.

Each of the chargeable resin pseudo fine particles is composed of polymers strongly interacted with each other to conditionally form physical crosslinks. This prevents the particles from being separated from the colorant or the resin component having a hydrophilic group and from being continuously eluted out of the particle, even when the particle contains many hydrophilic groups. By contrast, a colorant prepared by encapsulation (disclosed by, e.g., Japanese Patent Application Laid-Open No. H8-183920) may not always exhibit sufficient storage stability for extended periods, because a highly hydrophilic resin cannot be strongly bound to the colorant.

The chargeable resin pseudo fine particles fixing to the colorant for the dispersible colorant of the present invention brings another advantage of increased specific surface area by the morphology of the fixation. The increased specific surface area helps appear the charge on the particles to the colorant surface very efficiently. As a result, the dispersible colorant surface is highly charged. In other words, the dispersible colorant of the present invention has a morphology by which its surface is charged more efficiently and highly, and exhibits higher dispersion stability than the one coated with a resin representatively disclosed by Japanese Patent Application Laid-Open No. H8-183920, even when its resin component has a lower substantial acid or amine value.

In general, organic pigments are insolubilized (becoming pigments) when their color-developing colorant molecules are crystallized by strong interactions. When an organic pigment is used as the colorant for the dispersible colorant of the present invention, the chargeable resin pseudo fine particles fix to the pigment particle over several colorant molecules therein, as shown in FIG. 5, because there plural interaction sites in the interface between the pseudo-fine, chargeable particle and colorant, as discussed earlier. Therefore, the "pigment detachment" (illustrated in FIGS. 6A and 6B) caused by the colorant locally becoming hydrophilic should not occur in the present invention. It is preferable with an organic pigment as the colorant that the chargeable resin pseudo fine particles are kept smaller than the dispersed pigment particles but larger than the colorant molecules, to produce the dispersible colorant comprising the highly dispersible pigment without destroying the pigment crystal structure.

The condition of the chargeable resin pseudo fine particles "fixing" to the colorant in the present invention can be simply confirmed by the following procedure involving separation with three stages. In the first stage, the colorant to be confirmed is separated from other water-soluble components (including water-soluble resin) present in an ink or aqueous dispersion. In the second stage, the colorant and water-insoluble resin component are separated from the precipitate produced in the first stage. In the third stage, the weakly adsorbed resin component and dispersible colorant to which the chargeable resin pseudo fine particles fix are separated, to quantitatively analyze the resin component in the supernatant solution produced in the third stage, and to compare the precipitate produced in the second stage with those produced in the third stage. This procedure can confirm the conditions under which the chargeable resin pseudo fine particles fix to the colorant.

More specifically, the condition can be confirmed by the following procedures. An ink or water dispersion (20 g) is prepared in such a way as to be dispersed with a colorant in around 10% by mass of the total solid content, and centrifugally treated at 12,000 rpm for 60 minutes in the first stage. The resulting precipitate containing the colorant, settled as the lower layer, is redispersed in almost 3 times larger quantity of pure water, and centrifugally treated at 80,000 rpm for 90 minutes in the second stage. Then, the resulting precipitate containing the colorant, settled as the lower layer, is redispersed in 3 times larger quantity of pure water, and centrifugally treated again at 80,000 rpm for 90 minutes in the third stage. The resulting precipitate containing the colorant, settled as the lower layer, is collected from the system. The precipitate produced in the second and third stage is dried under a vacuum at 30°C for 18 hours and observed by a scanning electron microscope at a magnification of 50,000, where each sample is prepared to contain about 0.5 g of the solids. When the dispersible colorant is observed to have plural fine particles or similar agglomerates fixing to the surface, and the precipitate produced in the second and third stage have the similar morphology, then it is judged that the resin pseudo fine particles fix to the colorant. Moreover, about half of the upper supernatant layer produced in the third stage is slowly collected from the system and dried at 60°C for 8 hours, to determine the solid content from the weight difference before and after drying. When it is less than 1%, it is judged that no resin pseudo fine particles are separated from dispersible colorant and that these particles fix to the colorant.

The separation condition described above is a preferable example, but any procedure can be employed to judge whether or not the colorant is the dispersible one of the present invention, so long as it satisfies the object of the separation in three stages. More specifically, the first stage is to separate a colorant present in an ink or aqueous dispersion and resin components adsorbed thereon from water-soluble components. The second stage is to separate the colorant and resin component fixing thereto from the other resin component(s) adsorbed on the colorant. The third stage is to confirm that the resin component fixing to the colorant is not separated from the colorant. It is needless to say that any procedure which can satisfy the object of each stage may be used, whether it is known or newly developed. It may involve more than or less than three stages.

A second mode of the present invention is a dispersible colorant which is by itself dispersible with the chargeable resin pseudo fine particles 2 fixing to the water-insoluble colorant 1. As discussed earlier, the dispersible colorant of the present invention is self-dispersible, i.e., it can be stably dispersed in water and aqueous ink essentially in the absence of surfactants or polymeric dispersants. The definition and judgment procedure will be described later. The dispersible colorant of the present invention can dispense without any polymeric dispersant, another resin component or surfactant, which may be separated from the colorant over long periods and has been traditionally incorporated to stabilize colorant dispersion. As a result, the dispersible colorant of the present invention gives another advantage to aqueous ink, increased freedom of design of components other than the dispersible colorant. Therefore, the aqueous ink incorporated with the dispersible colorant of the present invention can secure sufficiently high printing concentration even on an ink-permeable recording medium, e.g., plain printing paper.

Self-dispersibility of the dispersible colorant of the present invention can be confirmed by, e.g., the following procedure. The ink or aqueous dispersion dispersed with the colorant is diluted 10 times thinly with pure water, and concentrated to the original concentration by an ultrafilter having a cut-off molecular weight of 50,000. The concentrated solution is centrifugally treated at 12,000 rpm for 2 hours, and the resultant precipitate is collected and redispersed in pure water. The colorant is judged to be self-dispersible, when the precipitate is well redispersed. Whether or not they are well redispersed may be judged by taking into consideration the following observations; uniform dispersion is visually observed, no precipitate is notably observed after the solution is allowed to stand for 1 to 2 hours, or precipitate, if any, can be dispersed by lightly shaking the solution, and the dispersed particle diameter, determined by dynamic light scattering, is 2 times or less as large as the original diameter before the treatment.

As described earlier, the dispersible colorant of the present invention has a large specific surface area caused by the chargeable resin pseudo fine particles fixing to the colorant, and realizes excellent storage stability by being massively charged on the vast area. The more preferable results can be produced when the chargeable resin pseudo fine particles massively fix to the colorant while being uniformly distributed. It is particularly preferable that these particles are apart from each other at a certain distance, and preferably distributed uniformly. Still more preferably, the colorant surface is exposed between these particles. These morphologies can be confirmed by a transmission or scanning electron microscope.
In other words, the microscopic observation can confirm whether or not these particles are apart from each other at a certain distance, or the colorant surface is exposed between these particles. These particles may be locally closer to each other or fused with each other in some cases. However, it is self-evident for the industry concerned that these particles fix to the colorant, when they are apart from each other at a certain distance or the colorant surface is exposed between these particles as a whole, and these conditions are distributed.

Moreover, the aqueous ink incorporated with the dispersible colorant of the present invention is found to be fast drying on a recording medium, conceivably resulting from the following mechanism, which, however, is not fully substantiated. The dispersible colorant is dispersed in an ink with the chargeable resin pseudo fine particles fixing to the colorant surface, as discussed earlier. When the ink reaches a recording medium, the solvent in the ink is absorbed in fine pores on the medium (voids between cellulose fibers in the case of plain paper, or fine pores in the receiving layer in the case of coated or glossy paper) by the capillary phenomenon. Then, the dispersible colorant of the present invention forms a number of fine interspaces in the area where the colorant comes into contact with each other and chargeable resin pseudo fine particles are uniformly distributed, resulting from its morphological characteristic. Therefore, the ink solvent present between the colorant particles is quickly absorbed in the recording medium by the capillary phenomenon.
The aqueous ink of the present invention exhibits more preferable fast-drying characteristics when it is incorporated with dispersible colorant having the chargeable resin pseudo fine particles uniformly distributed on the surface. This observation supports the above mechanism for fast drying.

The dispersible colorant of the present invention preferably has a surface functional group density of not less than 250 µmols/g, and less than 1,000 µmols/g, more preferably not less than 290 µmols/g, and less than 900 µmols/g. It may have deteriorated storage stability for extended periods at a lower density. At a fairly higher density, on the other hand, it may be difficult to secure a high printing concentration, because of excessive dispersion stability and hence permeability into the recording medium. The surface functional group density is more preferably in a range from not less than 350 µmols/g and less than 800 µmols/g with carbon black as the colorant, because carbon black has a higher specific gravity to need higher dispersion stability and higher black concentration on a recording medium is favored. The surface functional group density may be determined by, e.g., the following procedure, when the dispersible colorant is negatively charged. The aqueous dispersion or ink incorporated with the dispersible colorant is diluted with an excessive quantity of hydrochloric acid (HCl), and centrifugally treated at 20,000 rpm for 1 hour. The resulting precipitate is collected and redispersed in pure water, and its solid concentration is determined by the drying method. The redispersed precipitate is weighed and then incorporated with a known quantity of sodium hydrogen carbonate. The mixture is stirred to prepare the dispersion, which is centrifugally treated at 80,000 rpm for 2 hours. The supernatant solution is weighed, and titrated with 0.1 N hydrochloric acid for neutralization to determine the surface functional group density (mols/g-colorant) by subtracting the known sodium hydrogen carbonate quantity from the quantity for neutralization. When the dispersible colorant is charged with a cationic group as a polar group, the surface functional group density is determined in a similar manner except that hydrochloric acid and sodium hydrogen carbonate are replaced by sodium hydroxide (NaOH) and ammonium chloride, respectively.

The dispersible colorant having a surface energy of 70 mJ/m² or less is one of the preferred embodiments of the present invention. The inventors of the present invention have found that the dispersible colorant can secure adequate fixation characteristics on a recording medium, when controlled to have a surface energy in the above range. A colorant having a surface energy notably in excess of 70 mJ/m² may prevent the colorant from being smoothly separated from the aqueous ink medium because of excessive hydrophilicity of the dispersible colorant surface, and the recorded image from smoothly drying. Moreover, the dried image may be insufficiently resistant to water, conceivably resulting from strong hydrophilicity of the dispersible colorant surface, which causes redispersion of the colorant on the recording medium after it is agglomerated, when the image is exposed to water or aqueous marker pens. Surface energy of the dispersible colorant of the present invention can be controlled by any of surface charge of the colorant, functional group structure, and chemical and surface structure of the chargeable resin pseudo fine particles fixing to the colorant. Moreover, the chemical and surface structure of the chargeable resin pseudo fine particles can be controlled by any of polymerization initiators and monomer components for the particle synthesis process.

"Surface energy" in this specification means free energy at the interface between materials, and depends on chemical structure of the interface. A material of higher surface energy is more wettable and compatible with water. Surface energy of the dispersible colorant is defined as the value determined by an inverse gas chromatograph, supplied by Surface Measurement System. More specifically, it is determined by extrapolating gas holding time of the dispersible colorant, solidified into powder, as the stationary phase and that of organic gas of different polarity as the moving phase.

Next, each component for the dispersible colorant of the present invention will be described. Colorant

The colorant which is one component for the dispersible colorant of the present invention is described. It may be any known or newly developed colorant. However, it is preferably of a hydrophobic dye, inorganic pigment, organic pigment, metallic colloid, or colored resin powder which is insoluble in water and can be stably dispersed in water in the presence of a dispersant. It preferably has a particle diameter of 0.01 to 0.5 µm (10 to 500 nm) when dispersed, more preferably 0.03 to 0.3 µm (30 to 300 nm). The dispersible colorant of the present invention dispersed to have a particle diameter in the above range serves as a preferable dispersible colorant for aqueous inks, because such colorant gives high coloring capacity and high weather resistance of images. The dispersed diameter is the cumulant average determined by dynamic light scattering.

The inorganic pigments useful for the colorant include carbon black, titanium oxide, zinc white, Zinc oxide, Tripon, iron oxide, aluminum oxide, silicon dioxide, Kaolinite, montmorillonite, talc, barium sulfate, calcium carbonate, silica, alumina, cadmium red, iron oxide red, molybdenum red, chrome vermillion, molybdate orange, yellow lead, chromium yellow, cadmium yellow, yellow iron oxide, titanium yellow, chromium oxide, Pyridian, cobalt green, titanium cobalt green, cobalt chromium green, deep blue, ultramarine blue, Prussian blue, cobalt blue, cerulean blue, manganese violet, cobalt violet and mica.

The organic pigments useful for the present invention include those based on azo, azomethine, polyazo, phthalocyanine, quinacridone, anthraquinone, indigo, thioindigo, quinophthalone, benzimidazolone, isoindoline and isoindolinone.

The organic, water-insoluble colorants useful for the present inventin include hydrophobic dyes, e.g., those based on azo, anthraquinone, indigo, phthalocyanine, carbonyl, quinoneimine, methine, quinoline and nitro. Of these, dispersed dyes are particularly preferable.

### Chargeable Resin Pseudo Fine Particles

The chargeable resin pseudo fine particles which is another component for the dispersible colorant of the present invention are defined as a fine agglomerate of a resin of a sufficiently high polymerization degree, having a small dispersed unit (dispersed diameter) in water (or ink) in which they fix to the colorant. The fine agglomerate is morphologically close to a sphere in a pseudo manner or in the form of agglomerated fine particles (chargeable resin pseudo fine particles) having a uniform size in a certain range. The resin component for the chargeable resin pseudo fine particles are preferably composed of particles physically or chemically crosslinked to each other. Whether or not they are crosslinked to each other can be confirmed by, e.g., the following procedure. The resin component which constitutes the pseudo-fine, chargeable particles is estimated beforehand by a known analytical procedure, and a linear polymer having the same chemical structure (or monomer unit composition) is synthesized by solution polymerization. Then, the chargeable resin pseudo fine particles and the polymer are immersed in an organic solvent as a good solvent for the polymer to compare their solubility. The chargeable resin pseudo fine particles are judged to be crosslinked inside when they have a lower solubility than the polymer.

Another preferred embodiment is those having a cumulant average diameter of not less than 10 nm and not more than 200 nm, when it is measurable by dynamic light scattering. The particles more preferably have a polydisperse index of the dispersed diameter kept at less than 0.2, viewed from storage stability of the dispersible colorant for extended periods. Stabilization of the finely dispersed colorant as the primary object of the present invention may not be achieved when the dispersed particles have an average diameter of more than 200 nm or a polydisperse index more than 0.2. On the other hand, the dispersed chargeable resin pseudo fine particles having an average diameter less than 10 nm may not bring the advantage of the present invention, because they cannot sufficiently keep morphology of chargeable resin pseudo fine particles and the resin is more easily dissolved in water. The dispersed particles having an average diameter of not less than 10 nm and not more than 200 nm can efficiently realize stable dispersion of the colorant brought by the chargeable resin pseudo fine particles fixing to the colorant, because they are smaller than the colorant particles. The above preferred embodiments are valid when the diameter of dispersed chargeable resin pseudo fine particles cannot be measured. In this case, the diameter may be determined by electron microscopic observation. The preferred diameter range is considered to be the same as the above or close thereto.

When the colorant is of an organic pigment, it is particularly preferable that the dispersed chargeable resin pseudo fine particles have an average diameter in the above range, and, at the same time, smaller than that of the dispersed pigment and larger than that of the dispersed colorant molecules, because the structurally very stable and highly dispersible colorant can be obtained when these conditions are satisfied.

The chargeable particles for the present invention are those themselves having some ionized functional group in an aqueous medium, preferably self-dispersible by the chargeability. Whether the resin pseudo fine particles are chargeable or not may be confirmed by one of the following known methods; measurement of the zeta potential on the particle surface, potentiometric titration to determine functional group density, described later, confirmation of dependence of the dispersion stability of the chargeable resin pseudo fine particles on the electrolyte concentration after the aqueous dispersion of the particles is incorporated with an electrolyte, and analysis of the chemical structure of the chargeable resin pseudo fine particles to confirm whether an ionic functional group is present or not.

The resin component for the chargeable resin pseudo fine particles is not limited, and may be selected from any natural or synthetic polymeric compound, and the polymeric compound newly developed for the present invention. Those useful for the resin component for the present invention include acrylic, styrene/acrylic, polyester, polyurethane and polyurea resin, and polysaccharides and polypeptides. In particular, polymers and copolymers having a radically polymerizable unsaturated bond, into which acrylic, styrene/acrylic resins are classified, are preferably used because they can be generally used and easily processed to design functions of the pseudo-fine, chargeable particles.

The monomers having a radically polymerizable unsaturated bond (hereinafter referred to as radically polymerizable monomers or simply monomers) preferably used for the present invention include hydrophobic monomers, such as (meth)acrylic esters, e.g., methyl acrylate, ethyl acrylate, isopropyl acrylate, n-propyl acrylate, n-butyl acrylate, t-butyl acrylate, benzyl acrylate, methyl methacrylate, ethyl methacrylate, isopropyl methacrylate, n-propyl methacrylate, n-butyl methacrylate, iso-butyl methacrylate, t-butyl methacrylate, tridecyl methacrylate and benzyl methacrylate; styrene-based monomers, e.g., styrene, α-methylstyrene, o-methylstyrene, m-methylstyrene, p-methylstyrene and p-tert-butylstyrene; itaconic acid esters, e.g., benzyl itaconate; maleic acid esters, e.g., dimethyl maleate; fumaric acid esters, e.g., dimethyl fumarate; and acrylonitrile, metahcrylonitrile and vinyl acetate.

The following compounds falling into the category of hydrophilic monomers are also preferably used; monomers having an anionic group, such as those having carboxylic group, e.g., acrylic acid, methacrylic acid, crotonic acid, ethacrylic acid, propyl acrylate, isopropyl acrylateitaconic acid, fumaric acid and a salt thereof; those having sulfonic acid group, e.g., styrene sulfonate, 2-propylacrylamide sulfonate, acrylic acid-2-ethyl sulfonate, methacrylic acid-2-ethyl sulfonate, butylacrylamide sulfonate and a salt thereof; and those having phosphonic acid group, e.g., methacrylic acid-2-ethyl phosphonate and acrylic acid-2-ethyl phosphonate. Of these, acrylic acid and methacrylic acid are more preferable.

Those monomers having a cationic group include those having primary amino group, e.g., aminoethyl acrylate, aminopropyl acrylate, amide methacrylate, aminoethyl methacrylate, aminopropyl methacrylate; those having secondary amino group, e.g., methylaminoethyl acrylate, methylaminopropyl acrylate, ethylaminoethyl acrylate, ethylaminopropyl acrylate, methylaminoethyl methacrylate, methylaminopropyl methacrylate, ethylaminoethyl methacrylate and ethylaminopropyl methacrylate; those having tertiary amino group, e.g., dimethylaminoethyl acrylate, diethylaminoethyl acrylate, dimethylaminopropyl acrylate, diethylaminopropyl acrylate, dimethylaminoethyl methacrylate, diethylaminoethyl methacrylate, dimethylaminopropyl methacrylate and diethylaminopropyl methacrylate; those having quaternary ammonium group, e.g., chloride salt of dimethylaminoethylmethyl acrylate, chloride salt of dimethylaminoethylmethyl methacrylate, chloride salt of dimethylaminoethylbenzyl acrylate, chloride salt of dimethylaminoethylbenzyl methacrylate; and vinyl imidazoles.

Those falling into the category of nonionic, hydrophilic monomers include compounds having both radically polymerizable, unsaturated bond and hydroxyl group, which shows strong hydrophilicity. They include hydroxymethyl (meth)acrylate, hydroxyethyl (meth)acrylate and hydroxypropyl (meth)acrylate. Other known or new oligomers and macromonomers of various types can be used without any limitation.

Use of a crosslinkable monomer is still another preferred embodiment. These monomers include divinyl benzene, allyl (meth)acrylate and methylenebisacrylamide. Other known or new crosslinkable monomers of various types can be used.

Various characteristics of the dispersible colorant and chargeable resin pseudo fine particles can be adequately controlled by a number of controlling parameters, e.g., type and copolymerization ratio of the monomer which constitutes the chargeable resin pseudo fine particles, and type and concentration of a polymerization initiator for polymerizing the monomer. Use of a copolymer composed of at least one type of hydrophobic monomer and at least one type of hydrophilic monomer selected from the above for the chargeable resin pseudo fine particles is one of the particularly preferred embodiments. Use of at least one type of hydrophobic monomer gives the particles with good adhesion to the colorant and thermal stability, and use of at least one type of hydrophilic monomer provides good morphology controllability and dispersion stability. Therefore, incorporation of these monomers simultaneously can give the chargeable resin pseudo fine particles which can exhibit good fixation to the colorant and good dispersion stability. The chargeable resin pseudo fine particles to be fixed each other to the dispersible colorant and/or colorant for the present invention can have one or more additional functions by adequately selecting the monomer type and its copolymerization ratio for the resin component which satisfies one or more functions in addition to those described above.

For example, one of the preferred embodiments uses at least one type of hydrophobic monomer which has a methyl group at the α position and a radically polymerizable, unsaturated double bond. The aqueous ink composed of the dispersible colorant with the chargeable resin pseudo fine particles fixing to the colorant has very good ejectability, in particular in thermal ink jet recording, which ejects the ink by thermal energy, when a radically polymerizable monomer having a methyl group at the α position is used for the chargeable particles. The improved ejectability is considered to result from depolymerization of the resin, composed of a radically polymerizable monomer having a methyl group at the α position, at high temperatures to prevent the resin from sticking to the inside of the ejection port when the ink is exposed to heat energy, although this concept is not fully substantiated yet.

Another preferred embodiment uses the hydrophobic monomer which contains at least an alkyl ester of acrylic or methacrylic acid (hereinafter referred to as alkyl ester of (meth)acrylic acid).
An alkyl ester of (meth)acrylic acid is highly adhesive to a colorant and highly copolymerizable with the hydrophilic monomer component, and hence gives favorable effects to the chargeable resin pseudo fine particles, e.g., uniform surface characteristics and uniform fixation to the colorant.

Of the preferable hydrophobic monomers, benzyl methacrylate and methyl methacrylate are more preferable, and it is particularly preferable to incorporate at least one of them, because they have, in addition to the above functions, favorable characteristics of giving heat resistance and transparency to the chargeable resin pseudo fine particles. As a result, the dispersible colorant containing these particles has excellent color-developing capacity.

As described earlier, characteristics of the chargeable resin pseudo fine particles fixing to the dispersible colorant of the present invention and/or colorant therefor can be controlled by adequately selecting the type and copolymerization ratio of the monomer which constitutes the particles. The copolymer component for the particles is preferably controlled to have a glass transition temperature of not less than -40°C and not more than 60°C, more preferably not less than -30°C and not more than 55°C, still more preferably not less than -25°C and not more than 53°C, which is another preferred embodiment. In order to produce these particles, a monomer known to give a homopolymer having a low glass transition temperature is selected from the preferable monomers described above. A combination of n-butyl acrylate and acrylic acid in an adequate ratio is one of the preferred embodiments of the monomer component. A combination of ethyl methacrylate and methacrylic acid in an adequate ratio is another preferred embodiment of the monomer component. The glass transition temperature of the chargeable resin pseudo fine particles can be determined by differential scanning calorimeter analysis. For example, it was determined by an analyzer (METTLER, DSC822e). The analysis will be described in detail in EXAMPLES.

The dispersible colorant containing the copolymer component having a glass transition temperature of not less than -40°C and not more than 60°C is made into a film with the adjacent colorant on a recording medium to form a strong, colored film, due to excellent film-making characteristics of the chargeable resin pseudo fine particles. Therefore, the dispersible colorant of the above composition gives an image of high resistance to scratching, even when it is formed on a glossy recording medium, which is disadvantageous viewed from resistance of the image to scratching.

The aqueous ink incorporated with the dispersible colorant of the present invention containing the copolymer component having a glass transition temperature in the above range gives an image highly resistant to scratching, even when it is formed on a recording medium at temperatures not different much from room temperature. The reason is not clear, but the inventors of the present invention consider the following mechanism. The glass transition temperature of a resin determined by differential scanning calorimeter analysis is in general that of the resin in a dried condition, and is known to be lower with the resin which has absorbed water. In the chargeable resin pseudo fine particles which constitute the dispersible colorant of the present invention, the resin has absorbed water at least in the portion around the ionic functional group. The chargeable resin pseudo fine particles have a lower glass transition temperature than the measured one, when they constitute the dispersible colorant present in an aqueous medium to form an aqueous ink. Therefore, these particles can exhibit their film-making and adhesion characteristics when they are on a recording medium. The inventors of the present invention have found that these particles can suitably exhibit these characteristics when their glass transition temperature is in a range from not less than -30°C and not more than 55°C, more preferably not less than -25°C and not more than 53°C, and produce still more favorable results when the resin component for these particles contains at least one type of hydrophilic monomer.

A composition with an anionic monomer as the hydrophilic monomer is another preferred embodiment for the chargeable resin pseudo fine particles composed of a copolymer of at least one type of hydrophobic monomer and at least one type of hydrophilic monomer. In particular, incorporation of an anionic monomer can introduce more anionic groups into the chargeable resin pseudo fine particles, and hence is also an effective practice for controlling the surface functional group density on the colorant surface at a desired level, as discussed earlier. The dispersible colorant can exhibit higher dispersion stability in a high to medium pH range, when it contains an anionic monomer.

The anionic monomer useful for the present invention is not limited, so long as it has a functional group to be anionic in water. The particularly preferable ones include acrylic acid, methacrylic acid, p-styrene sulfonate and a salt thereof viewed from their copolymerization capacity with another monomer component, common availability and anionic strength.

When the above composition further contains at least a cationic monomer as the hydrophilic monomer, the dispersible colorant can exhibit higher dispersion stability in a medium to low pH range. Such a composition, therefore, is still another preferred embodiment. The cationic monomer useful for the present invention is not limited, so long as it has a functional group to be cationic in water. Of the radically polymerizable monomers cited above, those having a cationic group are suitably used. Synthesis of the Chargeable Resin Pseudo Fine Particles and their Fixation to a Colorant

The chargeable resin pseudo fine particles can be synthesized by a known procedure or method, and can be fixed to a colorant also by a known method for compositing with a colorant. The inventors of the present invention have invented, after having extensively studied, a method for simply producing the characteristic dispersible colorant comprising a colorant and chargeable resin pseudo fine particles having a smaller size than the colorant, wherein the colorant and particles are fixed to each other. The method of producing the dispersible colorant according to the present invention, which is preferably conducted in the present invention will be described below.

The inventors of the present invention have found that the dispersible colorant having the above characteristics can be very simply produced by aqueous deposition polymerization process carried out under the following conditions.

First, a water-insoluble colorant is dispersed in the presence of a dispersant to prepare an aqueous solution dispersed with the colorant. Then, a radically polymerizable monomer is polymerized in the presence of a radical-polymerization initiator in the aqueous dispersion by aqueous deposition polymerization process to fix chargeable resin pseudo fine particles to the colorant. The dispersible colorant prepared by the aqueous deposition polymerization process comprises the chargeable resin pseudo fine particles, which are also prepared by the process and uniformly distributed, fixing to the colorant. The dispersible colorant shows excellent dispersion stability by itself. The chargeable resin pseudo fine particles can be easily controlled to have the preferred characteristics described above by the aqueous deposition polymerization process, while well achieving the characteristic of the present invention of fixing to the colorant. The preferred embodiments of the above production method will be described below in detail.

### Dispersion of the Water-insoluble Colorant

First, the water-insoluble colorant, selected from those cited as the preferable ones for the present invention, is dispersed in the presence of dispersant to prepare an aqueous dispersion. The dispersant for dispersing the colorant in an aqueous solution is not limited, and may be ionic or nonionic. It is however preferable to use a polymeric dispersant or water-soluble polymeric compound to keep dispersion stability in the subsequent polymerization step. The particularly preferable one is a radically polymerizable monomer which is sufficiently soluble in water, and to be incorporated onto the fine colorant particle surface and in the polymerization step. Still more preferably, it has a hydrophobic segment which provides adsorption sites for a hydrophobic monomer at the oil droplet interface. Still more preferably, it has at least one type of the hydrophobic monomer used in the subsequent polymerization step as the constituent unit, because it can accelerate fixation of the chargeable resin pseudo fine particles to the colorant in that step.

The method for producing a polymeric dispersant or water-soluble polymeric compound serving as the dispersant for the present invention is not limited. For example, it can be produced by reacting a monomer having an ionic group with another polymerizable monomer in a non-reactive solvent in the presence or absence of a catalyst. It is found that good results can be produced by a dispersant of a styrene/acryl-based polymeric compound produced by polymerization of the above-described monomer having an ionic group and styrene monomer as the essential components, or acryl-based polymeric compound having an ionic group produced by polymerization of the monomer having an ionic group and (meth)acrylic acid ester-based monomer of not less than 5 carbon atoms as the essential components. It is preferable to use an anionic dispersant when the dispersible colorant having an anionic group is to be produced, and a dispersant having a cationic group or nonionic dispersant when the dispersible colorant having a cationic group is to be produced.

When fixation of the chargeable resin pseudo fine particles to the colorant is to be accelerated in the aqueous deposition polymerization process and, at the same time, dispersion stability of the colorant is to be kept in the polymerization step, it is a preferred embodiment to use an anionic dispersant having an acid value of not less than 100 and not more than 250, or a cationic dispersant having an amine value of not less than 150 and not more than 300. In the presence of a dispersant having an acid or amine value below the above range, the chargeable resin pseudo fine particles may not be kept well dispersed, because the hydrophobic monomer is more compatible with the dispersant than with the colorant in the subsequent aqueous deposition polymerization process, as a result of which the dispersant is separated from the colorant surface before the chargeable resin pseudo fine particles fix to the colorant. In the presence of a dispersant having an acid or amine value beyond the above range, on the other hand, fixation of the chargeable resin pseudo fine particles to the colorant surface may be retarded, because it is excessively strong in volume-displacing effect or static repulsion on the colorant surface. When an anionic dispersant is to be used, it preferably has carboxyl group as the anionic group, viewed from not retarding fixation of the chargeable resin pseudo fine particles to the colorant.

In the step for dispersing a water-insoluble colorant to prepare the aqueous dispersion, the colorant preferably has a diameter of not less than 0.01 µm and not more than 0.5 µm (not less than 10 nm and not more than 500 nm), particularly preferably not less than 0.03 µm and not more than 0.3 µm (not less than 30 nm and not more than 300 nm), after being dispersed. The dispersed diameter in this step is greatly reflected in the dispersed diameter of the dispersible colorant produced. Therefore, it is preferably in the above range, viewed from coloring capacity of the colorant, weather resistance of the image, and its dispersion stability.

The water-insoluble colorant for the present invention preferably has a dispersed particle size close to the monodisperse distribution. In general, the dispersible colorant with the chargeable resin pseudo fine particles fixing to the colorant generally tends to have a particle diameter distribution narrower than that in the aqueous dispersion to be treated in the polymerization step shown in FIG. 2B, although basically depending on the latter distribution. It is important to narrow the colorant particle diameter distribution, viewed from securely inducing fixation of the chargeable resin pseudo fine particles to the colorant by hetero-agglomeration. The inventors of the present invention have found that use of the colorant having a polydisperse index of 0.25 or less gives the dispersible colorant of excellent dispersion stability.

Different analytical procedures give a varying particle diameter of a dispersed colorant. In particular, organic pigment particles are rarely spherical. In this specification, the particle diameter is represented by the average particle size and polydisperse index, measured by dynamic light scattering (analyzer: Otsuka Electronics ELS-8000) and determined by the cumulant analysis.

The method of dispersing a water-insoluble colorant in water is not limited, so long as it is selected from those capable of stably dispersing a colorant in water under the conditions described earlier in the presence of the dispersant also described earlier. It may be known or newly developed for the present invention. When a water-insoluble colorant is a pigment, a polymeric dispersant is incorporated generally suitably at not less than 10% and not more than 130% by mass based on the pigment.

The water-insoluble colorant for the present invention is preferably not self-dispersible, because it allows to control characteristics of the dispersible colorant produced by the above-described preferred embodiment for producing the chargeable resin pseudo fine particles.

The colorant dispersing method for the present invention is not limited, so long as it is commonly used for the colorant, and may be selected from those using a dispersing machine, e.g., paint shaker, sand mill, agitator mill, three-roll mill or the like, high-pressure homogenizer, e.g., microfluidizer, nanomizer or multimizer, or ultrasonic dispersing machine.

### Radical-Polymerization Initiator

The radical-polymerization initiator for the present invention is not limited, so long as it is a common water-soluble radical-polymerization initiator. The specific examples of water-soluble radical-polymerization initiators include persulfates and water-soluble azo compounds. It may be a redox initiator composed of a combination of a water-soluble radical-polymerization initiator and reducing agent. More specifically, the optimum combination is designed and used in consideration of characteristics of the colorant, dispersant and monomer described above. It is preferably selected from those giving a polymerization initiator residue which has the same polarity sign as the surface characteristics of the dispersible colorant produced. For example, it is selected from those giving a neutral or anionic polymerization initiator residue, when a water-insoluble colorant having an anionic group is to be produced. This can produce the surface charge more efficiently. Similarly, it is preferably selected from those giving a neutral or cationic polymerization initiator residue, when a dispersible colorant having a cationic group is to be produced.

Use of a water-soluble azo compound as a radical-polymerization initiator (hereinafter referred to as aqueous azo-based radical-polymerization initiator) is another preferred embodiment of the present invention. Azo-based radical-polymerization initiators, including aqueous ones, are those compounds having at least one azo group, where the azo group portion is decomposed by heat (or light) to generate the radicals, thereby initiating polymerization. An aqueous azo-based radical-polymerization initiator causes pH reduction in the polymerization system to a lower extent as it reacts than a persulfate, and hence more efficiently controls generation of coarse particles resulting from deteriorated dispersibility of the system. Use of an azo-based radical-polymerization initiator for the polymerization for the present invention with a specific organic pigment, in particular a quinacridone-based pigment, since the water-insoluble colorant reduces the unreacted monomer residue after polymerization and secures a sufficient conversion. Therefore, it is a particularly preferable embodiment. A quinacridone-based pigment has a structure represented by the general formula (1): 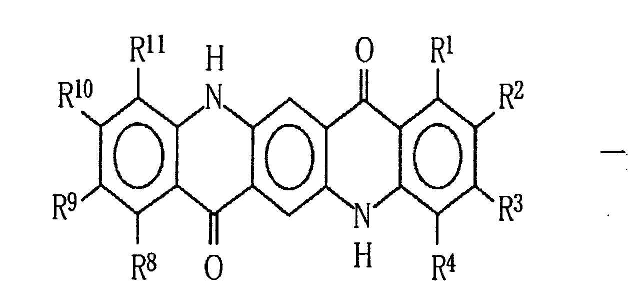 More specifically, these pigments include P.V. (Pigment violet) 19, P.R. (Pigment Red) 122, P.R. 192, P.R. 202, P.R. 206, P.R. 207 and P.R. 209. P.R. 122 as one of the preferable pigments for the present invention is represented by the general formula (1), wherein R² and R⁹ are each CH₃, and R¹, R³, R⁴, R⁸, R¹⁰ and R¹¹ are each H.

The azo-based radical-polymerization initiators preferable for the present invention include those commonly used for emulsion polymerization or the like. Moreover, they may be newly developed ones for emulsion polymerization. More specifically, they include VA-080 (2,2'-azobis(2-methyl-N-(1,1-bis(hydroxymethyl)-2-hydroxyethyl)propionamide)), VA-086 (2,2'-azobis(2-methyl-N-(2-hydroxyethyl)-propionamide)), VA-057 (2,2'-azobis(2-(N-(2-carboxyethyl)amidino)propane)), VA-058 (2,2'-azobis(2-(3,4,5,6-tetrahydropyrimidin-2-yl)propane)dihydrochloride), VA-060 (2,2'-azobis(2-(1-(2-hydroxyethyl)-2-imidazolin-2-yl)propane)dihydrochloride), V-50 (2,2'-azobis(2-amidinopropane)dihydrochloride) and V-501 (4,4'-azobis(4-cyanopentanoic acid)) (all supplied by Wako Pure Chemical Industries). Of aqueous azo-based radical-polymerization initiators, an initiator having carboxylic acid group and amino group, e.g., VA-057 (2,2'-azobis(2-(N-(2-carboxyethyl)amidino)propane)), brings another advantage in addition to those described above. The initiator residue bound to the pseudo-fine, chargeable resin particle surface is ampholytic and gives the dispersible colorant exhibiting good dispersion stability over a wide pH range. Use of such an initiator is still another preferred embodiment of the present invention.

### Radically Polymerizable Monomer

The radically polymerizable monomer for the method of the present invention becomes a component which constitutes the chargeable resin pseudo fine particles after undergoing the aqueous deposition polymerization process described earlier. It may be adequately selected in consideration of the characteristics of the chargeable resin pseudo fine particles and dispersible colorant to be produced, as discussed earlier for the essentially water-insoluble fine resin particles. The radically polymerizable monomer for the present invention is not limited. It may be known or newly developed.

### Aqueous Deposition polymerization process

Next, the preferred embodiments will be described for the aqueous deposition polymerization process as a step for synthesizing the chargeable resin pseudo fine particles and fixing them to the colorant, which is the feature of the present invention. It should be understood that the present invention is not limited by the embodiments described below. FIGS. 2A to 2D schematically illustrate the process flow of this process. The process is considered to comprise the following steps for producing the dispersible colorant. First, a colorant 1 is dispersed in an aqueous solution in the presence of a dispersant 3 to prepare the aqueous dispersion (FIG. 2A). Dispersion of the colorant 1 is stabilized in the presence of the adsorbed dispersant 3, the adsorption being thermally in equilibrium. Next, the aqueous dispersion prepared above is heated with stirring, to which a monomer component 4 is added together with, e.g., an aqueous radical-polymerization initiator 5 (FIG. 2B). The initiator 5 is decomposed under heating to release the radicals thereby accelerating the reactions between the hydrophobic monomer dissolved in trace quantities in the aqueous phase and the water-soluble monomer present in the aqueous phase.

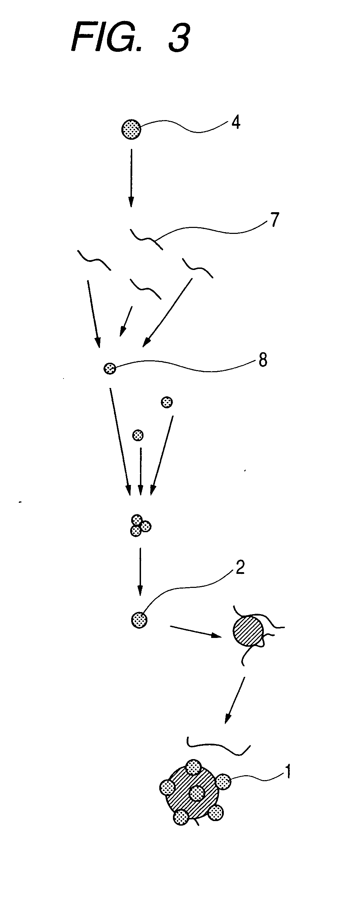

FIG. 3 schematically illustrates a step from polymerization of the monomer 4 to production of a dispersible colorant 6 (FIG. 2C). As the monomer 4 reaction described above proceeds, a oligomer 7 formed by polymerization of the monomer component becomes insoluble in water and becomes a precipitate 8 after separating out of the aqueous phase. The separated oligomer particles are not sufficient in dispersion stability, and are combined with each other to form the chargeable resin pseudo fine particles 2. These fine particles 2 undergo hetero-agglomeration with the hydrophobic surfaces of the colorant in the aqueous dispersion as nuclei, and the resin component which constitutes the pseudo-fine, chargeable particles 2 is strongly adsorbed on the surface of the colorant 1 by the hydrophobic interactions, while the polymerization reaction is proceeding within the chargeable resin pseudo fine particles 2. As a result, these fine particles 2 are transformed into a more energy-stable morphology while increasing the adsorption sites. At the same time, physical crosslinks are formed to a high extent within the chargeable resin pseudo fine particles 2, with the result that the fine particles 2 are solidified after reaching the morphology in which they are adsorbed most stably. The colorant 1, on the other hand, is stabilized, as the chargeable resin pseudo fine particles 2 are fixed thereto, allowing the dispersant adsorbed thereon to separate from the surface.

FIG. 4 schematically illustrates both sides of the interface between the chargeable resin pseudo fine particles 2 formed above and colorant 1. As shown, the chargeable resin pseudo fine particles 2 which are the agglomerates of the resin component have a hydrophilic monomer units 9-1 and hydrophobic monomer units 9-2. They are arbitrarily distributing to cause a distribution of local surface energy, and there are a number of adsorption sites 10 at which their surface energy coincides with that of the colorant.

FIG. 5 schematically illustrates the enlarged interface in which part of the pseudo-fine, chargeable particle of resin 11 fixes to part of the colorant particle 1a. The pseudo-fine, chargeable particle of resin 11 adsorbs the adsorption site 10 shown in FIG. 4 at the interface to fix to the colorant stably in a morphology which depends on the surface shape of the colorant part 1a. As described earlier, the polymerization proceeds within the pseudo-fine, chargeable particle of resin also during this step, and the particle is fixed to the colorant after reaching the morphology in which they are adsorbed most stably. The dispersible colorant of the composition described above can be easily produced by these steps (FIG. 2D). In the system with the chargeable resin pseudo fine particles sufficiently charged on the surface to be self-dispersible, they are apart from each other by the static repulsive force while they are adsorbed on and fix to the colorant by hetero-agglomeration to be uniformly distributed on the colorant particle surfaces. As a result, they take the preferred morphology described earlier.

The polymerization conditions vary depending on characteristics of the polymerization initiator, dispersant and monomer. Examples of the conditions are reaction temperature: not more than 100°C, preferably not less than 40°C and not more than 80°C, reaction time: 1 hour or more, preferably not less than 6 hours and not more than 30 hours, and stirring rate: not less than 50 rpm and not more than 500 rpm, preferably not less than 150 rpm and not more than 400 rpm.

In the above process, in particular when the chargeable resin pseudo fine particles are to be produced by polymerization of a monomer component containing at least one type of hydrophobic monomer and at least one type of hydrophilic monomer, the monomer component is preferably dropped in an aqueous dispersion of a water-insoluble colorant, incorporated beforehand with an aqueous radical-polymerization initiator. Or otherwise, the monomer component and aqueous radical-polymerization initiator are dropped in an aqueous dispersion of water-insoluble colorant simultaneously or separately, which is still a preferred embodiment. When a monomers mixture is composed of dissimilar monomers, e.g., hydrophobic monomers and hydrophilic monomers, it is preferable to keep the copolymerization ratio of the monomers at a constant to uniformly produce the desired chargeable resin pseudo fine particles. When the monomer mixture is incorporated in the polymerization system in excess of the quantity consumed by the polymerization reaction in a certain time, a specific monomer may be preferentially polymerized leaving the other, which is polymerized after the former monomer is consumed. In this case, the resulting chargeable resin pseudo fine particles may have significantly uneven characteristics. Some of these particles, in particular those containing the hydrophilic monomer component at a high proportion, may not fix to the colorant surface.

Moreover, the resin component containing the hydrophilic monomer component at a high proportion may not even separate out due to its high hydrophilicity to remain as a water-soluble resin component in the system without forming the chargeable resin pseudo fine particles. On the other hand, the hydrophobic/hydrophilic monomer copolymerization ratio can be kept at a constant to uniformly form the chargeable resin pseudo fine particles of a desired copolymerization ratio, when the monomer component is dropped in an aqueous dispersion of water-insoluble colorant containing an aqueous radical-polymerization initiator.

Some hydrophilic monomers, in particular anionic ones, e.g., acrylic acid and methacrylic acid, may become partly unstable to agglomerate, depending on characteristic of a polymeric dispersant working to disperse a colorant. It is a preferred embodiment of the present invention to incorporate an anionic monomer in the form of a sodium or potassium salt after it is neutralized, in order to avoid the above problem.

The above process for forming the chargeable resin pseudo fine particles fixing to the water-insoluble colorant is preferably followed by a purification treatment step to produce the aqueous ink containing the colorant. It is important for producing the dispersible colorant of high storage stability for extended periods to purify the mixture containing unreacted polymerization initiator, monomer component or dispersant, or water-soluble resin component or chargeable resin pseudo fine particles which fail to fix to the colorant. The purification step may be selected from those commonly used. Purification by centrifugal separation or ultrafiltration is a preferred embodiment.

The dispersible colorant with the chargeable resin pseudo fine particles containing a desired copolymer fixing to the colorant surface can be produced by employing the above steps, because many control parameters are well controlled. When an anionic monomer is incorporated to realize high dispersion stability, in particular, the steps for the present invention can secure a high surface functional group density and thereby high dispersion stability for the dispersible colorant, even when the anionic monomer is used in a relatively small quantity. Therefore, these steps can enhance dispersion stability of the chargeable resin pseudo fine particles without deteriorating storage stability of the dispersible colorant for extended periods.

The inventors of the present invention assume that the improved dispersion stability of the dispersible colorant results from the following mechanisms, which, however, are not fully substantiated. While the chargeable resin pseudo fine particles are being formed from the oligomers separating out during the polymerization step, initiated by the radicals generated in water, the oligomers containing the component derived from the anionic monomer at a higher content are preferentially oriented to the aqueous phase side, i.e., to the vicinity of the chargeable resin pseudo fine particles. This condition is kept after the chargeable resin pseudo fine particles fix to the colorant to further concentrate the anionic group derived from the anionic monomer component on the surface of the dispersible colorant of the present invention having structurally a large specific surface area. As a result, the dispersible colorant produced by the method of the present invention can be stabilized by a smaller quantity of the anionic monomer component.

### Aqueous Ink

The aqueous ink of the present invention is characterized by containing the dispersible colorant described above. When a pigment is used for the colorant, it is incorporated normally at not less than 0.1% and not more than 20% by weight based on the ink, preferably not less than 0.3% and not more than 15% by weight. It is preferable for the aqueous medium for the ink to contain water or water-soluble organic solvent, as required. The ink may be incorporated with a penetrant to accelerate its penetration into a recording medium, a preservative or an antifungal agent.

The dispersible colorant of the present invention contains the chargeable resin pseudo fine particles 2 fixing to the colorant 1 surface (FIGS. 1A and 1B) while it is present in the ink. Therefore, the colorant particle attaches to a recording medium or to an adjacent particle on the medium via the chargeable resin pseudo fine particles fixing to its surface. Therefore, the image produced with the aqueous ink of the present invention should be highly resistant to scratching. One of the more preferred embodiments is the aqueous ink which has, in addition to the above characteristics, the self-dispersible fine resin particles present therein. This permits the ink to produce highly glossy images on a glossy medium, which is normally difficult with a common water-insoluble colorant, e.g., pigment. More preferably, the ink has the chargeable resin pseudo fine particles (A) fixing to the colorant and self-dispersible fine resin particles (B) present in the ink, wherein the monomer component of the particles (A) and the monomer component of the particles (B) have at least one type of common monomer component. Such ink composition will greatly improve scratching resistance of the image on a glossy recording medium, because the particles (A) fixing to the colorant and particles (B) are more compatible with each other to increase ink adhesiveness.

The dispersible colorant of the present invention has an average surface zeta potential of not less than -80 mV and not more than -20 mV in the aqueous medium which constitutes the aqueous ink, in particular when it contains an anionic group, and not less than +10 mV and not more than +60 mV when it contains a cationic group. These are also preferred embodiments. The aqueous ink can have excellent storage stability for extended periods, when its dispersible colorant has a surface zeta potential in the above range. The dispersible colorant having a surface zeta potential of not less than -15 mV and not more than +10 mV may fail to exhibit its inherent high dispersion stability by the actions of an aqueous medium, resulting in the aqueous ink of insufficient dispersion stability for extended periods. On the other hand, the dispersible colorant having a surface zeta potential less than -80 mV or more than +60 mV may cause the image the ink gives insufficient in water resistance, although the ink has excellent storage stability.

The term "zeta (ζ) potential" used in this specification, sometimes referred to as interfacial dynamic potential, means potential produced in an interface between a solid and liquid in relative motion while they are in contact with each other. It is used to analyze surface conditions of a solid present in a liquid. In the electrically double layer produced in a solid/liquid interface, a stationary phase (or adsorbed phase) is on the solid side, where the stationary phase and solid surface are charged with ions of the opposite charge. When a solid and liquid are in relative motion, the stationary phase moves with the solid. Therefore, it will be the potential between the stationary phase surface and the inside of the solution that actually governs the motion, and is referred to as the zeta potential. The zeta potential may be positive or negative depending on charge of the stationary phase. When a water-insoluble colorant is stably dispersed in an ink, the colorant particles are kept separated from each other and stably dispersed by the zeta potential of the colorant. Therefore, the zeta potential is a property of significance for dispersion stability and storage stability on an ink containing a water-insoluble colorant for ink jet recording.

Moreover, the absolute value of the zeta potential itself greatly affects dispersion stability, and its distribution is also an important parameter. In a dispersion system in which colloidal dispersions of different zeta potentials are present, in particular, there is generally an attractive force working between a dispersion of a higher potential and another dispersion of a lower potential to agglomerate them even when they have the same sign (positive or negative) of potential. This phenomenon is known as hetero-agglomeration. In other words, the dispersible colorant of the present invention having a uniform absolute value of zeta potential exhibits its effect of stabilizing dispersion in the ink of the present invention. The inventors of the present invention have found that the dispersible colorant of the present invention exhibits the desirable effect of stabilizing the dispersion when its zeta potential distribution is less than 50 in terms of the standard deviation around the average level.

The zeta potential varies depending on various conditions, e.g., dielectric constant, pH and salt concentration, of an aqueous medium in which the colorant is present, which is the same with any other colloidal dispersion. Therefore, the zeta potential should be discussed for its absolute value and distribution measured under specific conditions of medium in which the colorant is dispersed. The zeta potential of the dispersible colorant in an aqueous ink may be determined by a common procedure. The zeta potential was determined for the present invention by an analyzer (Microtech Nitchion ZEECOM), where an aqueous mixed solvent for the aqueous ink incorporated with the colorant at an adequate dilution ratio was put in a constant electrical field to observe movement of the dispersed particles (of the dispersible colorant in the present invention) and determine the movement velocity of the particles by image processing.

However, it should be noted that the zeta potential may not be determined by the analytical procedure described above for an ink containing a specific electrolyte at a high concentration even in an aqueous medium of the same composition, because of excessively high electroconductivity of the medium. In such a case, the zeta potential of the dispersible colorant can be determined after the aqueous medium is treated to have a pH level corresponding to that of the ink in use by removing or reducing the electrolyte to 0.01 M. The above ink actually contains an electrolyte at a high concentration, and tends to have decreased storage stability. However, it can have improved storage stability by keeping the colorant at a zeta potential in the range for the present invention.

When a pigment is used as the colorant, it is a preferred embodiment to incorporate the pigment in a specific ratio to the resin component of the chargeable resin pseudo fine particles, or resin/pigment ratio (B/P ratio) of not less than 0.3 and not more than 4.0 by mass for improved scratching resistance of the image formed by the aqueous ink. Keeping the B/P ratio at not less than 0.3 can enhance adhesiveness between the colorant particles and between colorant particles and recording medium, and hence enhance resistance of the image to scratching. In particular, the aqueous ink incorporated with the dispersible colorant can exhibit its film-making capacity more efficiently, when the copolymer component for the chargeable resin pseudo fine particles fixing to the colorant has a glass transition temperature of not less than -40°C and not more than 60°C, as described earlier, and further enhance scratching resistance of the image on a glossy paper. At a B/R ratio significantly exceeding 4.0, the ink may be sufficiently viscous as a whole to have deteriorated ejectability, in particular for ink jet recorders. Moreover, such an ink may not secure sufficient image density, because of the excessively high resin ratio to deteriorate color-developing capacity of the colorant on a recording medium. Keeping the B/P ratio in the above range of not less than 0.3 and not more than 4.0 can give the aqueous ink which simultaneously exhibits excellent scratching resistance and ejectability in ink jet recorders. The resin mass described above means the total quantity of the chargeable resin pseudo fine particles, and may include another resin component which is clearly observed to be strongly adsorbed on the pigment surface. However, it does not include a water-soluble resin component which is easily separated from the pigment.

The B/P ratio can be generally determined by differential thermogravimetric analysis, and was determined by an analyzer (METTLER, TGA/SDTA851) for the present invention. More specifically, the dispersible colorant of the present invention or aqueous ink incorporated therewith for ink jet recording was centrifugally treated at 80,000 rpm for 2 hours, dried, weighed and heated in a nitrogen atmosphere or air to observe weight change of each of the pigment and resin components before and after its decomposition temperature, from which the B/P ratio was determined.

### Recorded Image

The image of the present invention recorded on a recording medium with the aqueous ink of the present invention incorporated with the dispersible colorant of the above-described composition is produced by the ink jet recorder, described later. The recording medium used for the present invention is not limited, so long as it allows production of an image thereon by ink jet recording.

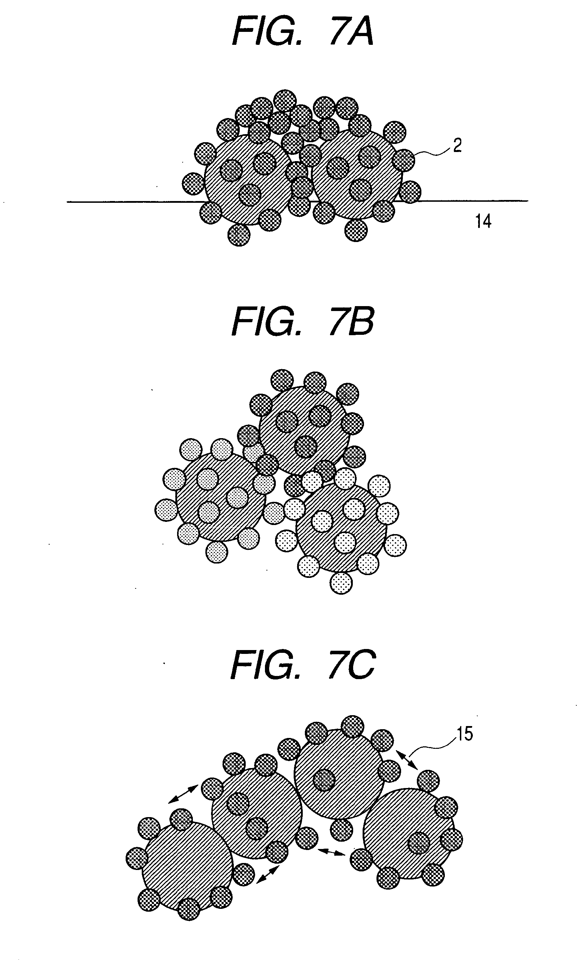

The dispersible colorant of the present invention includes functions by its characteristic shapes, shown in FIGS. 7A, 7B and 7C, for producing the inkjet recorded image of the present invention. Of these functions, those shown in FIGS. 7B and 7C are more preferable, and appear simultaneously in the actual recording. The function shown in FIG. 7A tends to appear where the aqueous ink described above is further incorporated with the self-dispersible resin fine particles B, to produce the highly glossy image on a recording medium 14, where the chargeable resin pseudo fine particles or self-dispersible fine resin particles B accumulate on the medium to smoothen irregularities between the colorant particles. In FIG. 7B, the chargeable resin pseudo fine particles 2 present between the adjacent colorant particles fix simultaneously to these colorant particles, to form a strong colored film for the recorded image of high scratching resistance. FIG. 7C shows another preferred function, where the ratio of the colorant surface to which the chargeable resin pseudo fine particles fix is decreased to partly allow agglomeration of the colorant particles themselves while realizing the function shown in FIG. 7B. FIG. 7C illustrates agglomeration of the colorant particles in the ink by which an image is formed on a recording medium, where static repulsion between the chargeable resin pseudo fine particles (represented by arrows 15 in the figure) is balanced with agglomeration force of the colorant particles in the agglomeration process to control the agglomeration. Such control enables controlling of image density and ink bleeding through colorant agglomeration control on recording medium.

### Image Recording Method and Recorder

The dispersible colorant and aqueous ink incorporated therewith, both of the present invention, exhibit excellent characteristics when used in an ink-jet head and stored in an ink tank. The ink is also useful for filling ink. The present invention exhibits particularly excellent characteristics when used in a recording head and recorder of the Bubble Jet® type recording method.

The representative structure and working principle are preferably based on the basic principle disclosed in U.S. Patent Nos. 4,723,129 and 4,740,796. This principle is applicable to an on-demand or continuous type. It is particularly effective when applied to an on-demand type, where at least one driving signal is transmitted to an electrothermal converter placed in a position corresponding to each of a sheet and liquid passage by which the ink is held to rapidly heat the ink to a temperature beyond the nucleate boiling temperature, the converter being sufficiently generating heat to cause film boiling on the heated recording head surface, with the result that the bubbles are formed in the ink corresponding to the signal. The ink is ejected through a ejection port by the actions of the bubbles growing and contracting to form at least one droplet. The pulsed signal is more preferable, because it can immediately and adequately cause growth and contract of the bubbles to achieve ink eject of high response. USP 4,463,359 and 4,345,262 disclose the preferable pulsed signals. The recording can be performed more effectively under the conditions disclosed by U.S. Patent No. 4,313,124 describes the temperature rising rate on the heat-working surface in the head.

The preferable head structures include combinations of ejection ports, liquid passages (linear or right angle to liquid passages) and electrothermal converters, as disclosed by the above USP specifications. The present invention is also effective in a structure with the components positioned on the curved heat-working surface, as disclosed by U.S. Patent No. 4,558,333 or 4,459,600. It is also effective in another structure with plural 2 electrothermal converters sharing one or more common ink ejection ports and their own ejection ports, as disclosed by Japanese Patent Application Laid-Open No. S59-123670. A full-line type recording head, which covers a length corresponding to the maximum width over which the recorder can produce images, may have a combination of a plurality of recording heads disclosed by the above specifications to cover the required length, or may be of such a structure that they are assembled in one body. The present invention helps these types exhibit the above-described effect more efficiently.

The present invention is also effective when fixed to an exchangeable chip type recording head body in which it can be electrically connected to the body to supply ink thereform, and also to a cartridge type in which it is integrally mounted on the recording head itself. The present invention can exhibit its effect more efficiently, when provided, as one component to the recording head, with a recovery unit or another auxiliary means, which is still another advantage of the present invention. More specifically, these include capping, cleaning and pressurizing or inducing means, electrothermal converter or another heating device, preliminary heating means comprising a combination of these devices, and a combination of these devices for a preliminary eject mode which is not for recording.

### EXAMPLES

The present invention will be described in more detail by EXAMPLES and COMPARATIVE EXAMPLES, which by no means limit the present invention, and variations may be made so long as within the scope of the present invention. In EXAMPLES and COMPARATIVE EXAMPLES, "part(s)" and "%" are by mass unless otherwise stated.

### EXAMPLE 1

A recording ink 1 was prepared by the following procedure in EXAMPLE 1. First, a mixed solution having a composition of 10 parts of carbon black, 6 parts of glycerin, 10 parts of a styrene/acrylic resin-based dispersant and 74 parts of water was prepared as a pigment dispersion solution 1 by treating these components by a sand mill (Kaneda Scientific) with 0.6 mm-diameter zirconia beads at 1,500 rpm for 5 hours to disperse the pigment, where the pot was filled with a filling rate of 70%. The carbon black was Black Pearls 880 (hereinafter referred to as BP880) supplied from US's Cabot Co. The styrene/acrylic resin-based dispersant had a copolymerization ratio of 70/30, molecular weight (Mw) of 8,000 and acid value of 170. It was an aqueous solution prepared by stirring the dispersant together with water and potassium hydroxide in an amount equivalent to the acid value at 80°C. The resulting pigment dispersion solution 1 was stably dispersed with the pigment particles, having an average dispersed particle diameter of 98 nm and polydisperse index of 0.16.

Next, the following mixed solution was slowly dropped in 100 parts of the pigment dispersion solution 1 with electrically stirring at 70°C in a nitrogen atmosphere for polymerization continued for 5 hours. The mixed solution comprised 5.5 parts of methyl methacrylate, 0.5 parts of acrylic acid, 0.12 parts of potassium hydroxide, 0.05 parts of potassium persulfate and 20 parts of water. The resulting dispersion solution was diluted by 10 times with water, and centrifugally treated at 5,000 rpm for 10 minutes to remove the agglomerates. It was further centrifugally purified at 12,500 rpm for 2 hours to produce the precipitate as the dispersible colorant 1.

The dispersible colorant 1 dispersed in water and centrifugally purified at 12,000 rpm for 60 minutes. The resulting precipitate was redispersed in water and dried to be analyzed by a scanning electron microscope (JOEL Hightech, JSM-6700) at a magnification of 50,000. It was observed that the dispersible colorant 1 comprised fine resin particles fixing to the carbon black surface. The colorants prepared in other EXAMPLES were observed in the same manner to confirm the colorant morphologies.

The following composition was incorporated with the dispersible colorant 1, and filtered by a membrane filter (pore size: 2.5 µm) under pressure to prepare the recording ink 1 containing the colorant 1 at 4%.
- Glycerin 7 parts
- Diethylene glycol 5 parts
- Trimethylol propane 7 parts
- Acetylenol EH (Trade name: Kawaken Fine Chemicals) 0.2 parts
- Ion-exchanged water Balance

### EXAMPLE 2

The following mixed solution was slowly dropped in 100 parts of the pigment dispersion solution 1 prepared in EXAMPLE 1 with electrically stirring at 70°C in a nitrogen atmosphere for polymerization continued for 8 hours. The mixed solution comprised 5.7 parts of styrene, 0.3 parts of acrylic acid, 0.07 parts of potassium hydroxide, 0.05 parts of potassium persulfate and 20 parts of water. The polymerization mixture was centrifugally purified in the same manner as in EXAMPLE 1 to prepare a dispersible colorant 2. A recording ink 2 containing the dispersible colorant 2 at 4% was prepared in the same manner as in EXAMPLE 1.

### EXAMPLE 3

The following mixed solution was slowly dropped in 100 parts of the pigment dispersion solution 1 prepared in EXAMPLE 1 with electrically stirring at 70°C in a nitrogen atmosphere for polymerization continued for 6 hours. The mixed solution comprised 5.7 parts of methyl methacrylate, 0.3 parts of acrylic acid, 0.07 parts of potassium hydroxide, 0.05 parts of potassium persulfate and 20 parts of water. The polymerization mixture was centrifugally purified in the same manner as in EXAMPLE 1 to prepare a dispersible colorant 3.

The polymerization was carried out in the same manner as in EXAMPLE 1, except that 100 parts of the pigment dispersion solution 1 was replaced by 100 parts of a 2% aqueous solution of potassium hydroxide, in an amount equivalent to the styrene/acrylic resin-based dispersant used in EXAMPLE 1 and the polymerization mixture was centrifugally purified in the same manner as in EXAMPLE 1, except at 20,000 rpm for 1 hour, to prepare the fine resin particles B1.

A recording ink 3 containing the dispersible colorant 3 and fine resin particles B1 at 4 and 1.2%, respectively, was prepared in the same manner as in EXAMPLE 1.

### EXAMPLE 4

The following mixed solution was slowly dropped in 100 parts of the pigment dispersion solution 1 prepared in EXAMPLE 1 with electrically stirring at 70°C in a nitrogen atmosphere for polymerization continued for 6 hours. The mixed solution comprised 4.5 parts of benzyl methacrylate, 1.2 parts of butyl acrylate, 0.3 parts of acrylic acid, 0.07 parts of potassium hydroxide, 0.05 parts of potassium persulfate and 20 parts of water. The polymerization mixture was centrifugally purified in the same manner as in EXAMPLE 1 to prepare a dispersible colorant 4.

The dispersible colorant 4 was analyzed in the same manner as in EXAMPLE 1. It was confirmed that it also comprised the fine resin particles fixing to the carbon black surface, but more fused than those observed in EXAMPLE 1.

The polymerization was carried out in the same manner as in EXAMPLE 3 for preparing the fine resin particles B1 by replacing 100 parts of the pigment dispersion solution 1 for EXAMPLE 1, to prepare the fine resin particles B2. The recording ink 4 containing the dispersible colorant 4 and fine resin particles B2 at 4 and 1.2%, respectively, was prepared in the same manner as in EXAMPLE 1.

### EXAMPLE 5

The following mixed solution was slowly dropped in 100 parts of the pigment dispersion solution 1 prepared in EXAMPLE 1 with electrically stirring at 50°C in a nitrogen atmosphere for polymerization continued for 5 hours. The mixed solution comprised 6 parts of butyl acrylate, 0.05 parts of potassium persulfate, the same mols of sodium thiosulfate as potassium persulfate and 20 parts of water. The polymerization mixture was centrifugally purified in the same manner as in EXAMPLE 1 to prepare a dispersible colorant 5.

The dispersible colorant 5 was analyzed in the same manner as in EXAMPLE 1. It was confirmed that it also comprised the fine resin particles fixing to the carbon black surface, but more fused than those observed in EXAMPLE 1. A recording ink 5 containing the dispersible colorant 5 at 4% was prepared in the same manner as in EXAMPLE 1.

### EXAMPLE 6

The following mixed solution was slowly dropped in 100 parts of the pigment dispersion solution 1 prepared in EXAMPLE 1 with electrically stirring at 70°C in a nitrogen atmosphere for polymerization continued for 5 hours. The mixed solution comprised 17.2 parts of methyl methacrylate, 0.8 parts of sodium p-styrenesulfonate, 0.05 parts of potassium persulfate and 20 parts of water. The polymerization mixture was centrifugally purified in the same manner as in EXAMPLE 1 to prepare a dispersible colorant 6. A recording ink 6 containing the dispersible colorant 6 at 4% was prepared in the same manner as in EXAMPLE 1.

### EXAMPLE 7

A recording ink 7 was prepared by the following procedure in EXAMPLE 7. First, a mixed solution having a composition of 10 parts of carbon black, 6 parts of glycerin, 10 parts of a styrene/dimethylaminoethyl acrylate copolymer-based cationic dispersant and 74 parts of water was prepared as a pigment dispersion solution 2 by treating these components by a sand mill (Kaneda Scientific Co.) with 0.6 mm-diameter zirconia beads at 1,500 rpm for 5 hours to disperse the pigment, where the pot was filled with a filling rate of 70%. The carbon black was the same as that for EXAMPLE 1 (BP880). The styrene/dimethylaminoethyl acrylate copolymer-based cationic dispersant had a copolymerization ratio of 70/30, Mw of 8,000 and amine value of 170. It was an aqueous solution prepared by stirring the dispersant together with water and acetic acid in a quantity slightly in excess of that required for the above amine value at 80°C. The resulting pigment dispersion solution 2 was stably dispersed with the pigment particles, having an average dispersed particle diameter of 105 nm and polydisperse index of 0.18.

Next, the following mixed solution was slowly dropped in 90 parts of the pigment dispersion solution 2 with electrically stirring at 55°C in a nitrogen atmosphere for polymerization continued for 7 hours. The mixed solution comprised 4.2 parts of benzyl methacrylate, 1.8 parts of dimethylaminoethyl acrylate, 0.3 parts of V-50 (Wako Pure Chemical Industries) and 20 parts of water. The resulting dispersion solution was diluted 10 times with water, and centrifugally treated at 5,000 rpm for 10 minutes to remove the agglomerates. It was further centrifugally purified at 12,500 rpm for 2 hours to produce the precipitate as a dispersible colorant 7. A recording ink 7 containing the dispersible colorant 7 at 4% was prepared, where the colorant 7 was filtered and compounded with the composition in the same manner as in EXAMPLE 1.

### EXAMPLE 8

A recording ink 8 was prepared by the following procedure in EXAMPLE 8. First, a mixed solution having a composition of 10 parts of Pigment Blue (PB) 15:13 (Clariant Co.) as a colorant, 6 parts of glycerin, 10 parts of a styrene/acrylic acid-based dispersant and 74 parts of water was prepared as a pigment dispersion solution 3 by treating these components by a sand mill (Kaneda Scientific Co.) with 0.6 mm-diameter zirconia beads at 1,500 rpm for 5 hours to disperse the pigment, where the pot was filled with a filling rate of 70%. The styrene/acrylic acid-based dispersant had a copolymerization ratio of 70/30, Mw of 8,000 and acid value of 170. The resulting pigment dispersion solution 3 was stably dispersed with the pigment particles, having an average dispersed particle diameter of 108 nm and polydisperse index of 0.14.

Next, the following mixed solution was slowly dropped in 100 parts of the pigment dispersion solution 3 with electrically stirring at 70°C in a nitrogen atmosphere for polymerization for 5 hours. The mixed solution comprised 5.7 parts of methyl methacrylate, 0.3 parts of acrylic acid, 0.07 parts of potassium hydroxide, 0.05 parts of potassium persulfate and 20 parts of water. The resulting dispersion solution was diluted 10 times with water, and centrifugally treated at 5,000 rpm for 10 minutes to remove the agglomerates. It was further centrifugally purified at 12,500 rpm for 2 hours to produce the precipitate as a dispersible colorant 8. The recording ink 8 containing the dispersible colorant 8 at 3.5% was prepared, where the colorant 8 was filtered and compounded with the composition in the same manner as in EXAMPLE 1.

### EXAMPLE 9

A recording ink 9 was prepared by the following procedure in EXAMPLE 9. First, a mixed solution having a composition of 10 parts of Pigment Yellow (PY) 180 (Clariant Co.) as the colorant, 6 parts of glycerin, 10 parts of a styrene/acrylic acid-based dispersant and 74 parts of water was prepared as a pigment dispersion solution 4 by treating these components by a sand mill (Kaneda Scientific) with 0.6 mm-diameter zirconia beads at 1,500 rpm for 5 hours to disperse the pigment, where the pot was filled with a filling rate of 70%. The styrene/acrylic acid-based dispersant had a copolymerization ratio of 70/30, Mw of 8,000 and acid value of 170. The resulting pigment dispersion solution 4 was stably dispersed with the pigment particles, having an average dispersed particle diameter of 126 nm and polydisperse index of 0.16.

Next, the following mixed solution was slowly dropped in 100 parts of the pigment dispersion solution 4 with electrically stirring at 70°C in a nitrogen atmosphere for polymerization for 5 hours. The mixed solution comprised 5.7 parts of methyl methacrylate, 0.3 parts of acrylic acid, 0.07 parts of potassium hydroxide, 0.05 parts of potassium persulfate and 20 parts of water. The resulting dispersion solution was diluted 10 times with water, and centrifugally treated at 5,000 rpm for 10 minutes to remove the agglomerates. It was further centrifugally purified at 12,500 rpm for 2 hours to produce the precipitate as a dispersible colorant 9.

The recording ink 9 containing the dispersible colorant 9 at 3.5% was prepared, where the colorant 9 was filtered and compounded with the composition in the same manner as in EXAMPLE 1.

### EXAMPLE 10

A recording ink 10 was prepared by the following procedure in EXAMPLE 10. First, a mixed solution having a composition of 10 parts of Pigment Red (PR) 122 (Ciba Specialty Chemicals Co.) as a colorant, 6 parts of glycerin, 10 parts of a styrene/acrylic acid-based dispersant and 74 parts of water was prepared as a pigment dispersion solution 5 by treating these components by a sand mill (Kaneda Scientific) with 0.6 mm-diameter zirconia beads at 1,500 rpm for 5 hours to disperse the pigment, where the pot was filled with a filling rate of 70%. The styrene/acrylic acid-based dispersant had a copolymerization ratio of 70/30, Mw of 8,000 and acid value of 170. The resulting pigment dispersion solution 5 was stably dispersed with the pigment particles, having an average dispersed particle diameter of 96 nm and polydisperse index of 0.13.

Next, the following mixed solution was slowly dropped in 100 parts of the pigment dispersion solution 5 with electrically stirring at 70°C in a nitrogen atmosphere for polymerization for 5 hours. The mixed solution comprised 5.7 parts of methyl methacrylate, 0.3 parts of acrylic acid, 0.07 parts of potassium hydroxide, 0.05 parts of VA-057 (Wako Pure Chemical Industries) and 20 parts of water. The resulting dispersion solution was diluted 10 times with water, and centrifugally treated at 5,000 rpm for 10 minutes to remove the agglomerates. It was further centrifugally purified at 12,500 rpm for 2 hours to produce the precipitate as a dispersible colorant 10.

The recording ink 10 containing the dispersible colorant 10 at 3.5% was prepared, where the colorant 10 was filtered and compounded with the composition in the same manner as in EXAMPLE 1.

### Characteristics of Dispersible Colorants

The dispersible colorant prepared in each of EXAMPLES 1 to 10 was analyzed by the procedures described below to measure its properties. The results are given in Table 1.

### Fixation and Presence Mode of Fine Resin Particles

Each dispersible colorant was dispersed in water and dried to be analyzed by a scanning electron microscope (JOEL Hightech, JSM-6700) at a magnification of 50,000. Conditions and characteristics of the fine resin particles fixing to the colorant were evaluated according to the following standards:
Conditions of the Fine Resin Particles Fixing to the Colorant ○ : Fixation of the fine resin particles to the colorant is confirmed.
× : Fixation of the fine resin particles to the colorant is not confirmed.

### Presence Mode of the Fine Resin Particles

○ : Resin fine particles are observed to be uniformly distributed.
× : Resin fine particles are observed to be unevenly distributed or to fix to the colorant unevenly.

### Dispersion Stability

A 5% aqueous dispersion of each dispersible colorant was diluted 10 times with pure water, and concentrated to the original concentration by an ultrafilter having a cut-off molecular weight of 50,000. The concentrated solution was centrifugally treated at 12,000 rpm for 2 hours, and the resultant precipitate was collected and redispersed in pure water. The colorant was visually observed whether the particles were uniformly dispersed, and analyzed by dynamic light scattering to confirm whether the particle diameter was 2 times or less as large as the original diameter before the treatment. It was evaluated according to the following standards.
○ : The above conditions are satisfied.
× : The above conditions are not satisfied.

### Storage Stability for Extended Periods

Storage stability for extended periods was visually observed after the aqueous dispersion of each colorant put in a closed glass bottle was allowed to stand at 60°C for 1 month. It was evaluated according to the following standards.
A: No agglomeration or precipitation of the solids is observed.
B: Precipitation of the solids is observed to some extent, but the solution is returned back to the original dispersed condition when shaken slightly.
C: Agglomeration or precipitation of the solids is observed, and the solution is not returned back to the original dispersed condition when shaken slightly.

### Average Particle Size

Each dispersible colorant was analyzed by dynamic light scattering (analyzer: Otsuka Electronics ELS-8000) and the average particle diameter was represented by the cumulant average.

### Glass Transition Temperature: Tg (°C)

Glass transition temperature of the fine resin particles fixing to the colorant was analyzed by an analyzer (METTLER-TOLEDO's DSC822e), where the dried dispersible colorant sample was heated at 0.5°C/minute.

### Surface Functional Group Density

The surface functional group density of each dispersible colorant was determined by the following procedure. The aqueous dispersion of the dispersible colorant was diluted with an excessive quantity of hydrochloric acid (HCl), and centrifugally treated at 20,000 rpm for 1 hour. The resulting precipitate was redispersed in pure water, and its solid concentration was determined. The redispersed precipitate was weighed and then incorporated with a known quantity of sodium hydrogen carbonate, and stirred and then centrifugally treated at 80,000 rpm for 2 hours. The supernatant solution was weighed, and titrated with 0.1 N hydrochloric acid for neutralization to determine the surface functional group density by subtracting the known sodium hydrogen carbonate quantity and blank value with pure water from the quantity for neutralization. When the dispersible colorant was known to have a cationic group as a polar group, the surface functional group density was determined in a similar manner except that hydrochloric acid and sodium hydrogen carbonate were replaced by sodium hydroxide (NaOH) and ammonium chloride, respectively.

### Surface Energy

The dried and crushed dispersed colorant was put in a column and analyzed by the inverse gas chromatography (Surface Measurement System), where hexane, heptane, pentane, chloroform, ethanol or acetone was used as the probe gas. Surface energy was determined by extrapolating gas holding time of the dispersible colorant with each probe gas. Composition and evaluation results of the ink prepared in each of EXAMPLES 1 to 8 are shown in Table 1, where MMA: methyl methacrylate, AAc: acrylic acid, St: styrene, BzMA: benzyl methacrylate, BA: butyl acrylate, NaSS: sodium p-styrenesulfonate, DMAEA: dimethylaminoethyl acrylate, KPS: potassium persulfate and NaTS: sodium thiosulfate.

### Evaluation Procedures for Aqueous Ink for Ink Jet Recording, and Evaluation Results

The inks were evaluated for their characteristics by the following procedures. The image was produced with each ink on a recording medium by an ink jet recorder (Canon's BJ S600), and evaluated. The image was evaluated for optical density (OD), sharpness, scratching resistance, marker resistance, storage stability at normal temperature and ejection stability. The results are given in Table 2.

### Resin/pigment ratio by mass (B/P ratio)

The B/P ratio was analyzed by differential thermogravimetric analysis (METTLER-TOLEDO, TGA/SDTA851) and calculated for the dried ink. Surface Zeta (ζ) Potential

The dispersible colorant prepared in each EXAMPLE was diluted around 100,000 times in the aqueous solvent used in EXAMPLE 1, free of the dispersible colorant and fine resin particles, and ζ potential on the cell's stationary surface was measured by an analyzer (Microtech Nitchion ZEECOM) for 100 particles. The average potential and standard deviation with the 100 particles are reported.

### Optical Density (OD)

Optical density (OD) was determined for the black text image recorded with each recording ink on a Canon's PPC paper and allowed to stand for 1 day. The inks were evaluated according to the following standards, except for the ink prepared in EXAMPLE 8, which was evaluated for cyan OD in place of black OD and rated "A" when it was not less than 1.0.
A: Image OD is not less than 1.3.
B: Image OD is not less than 0.8 and less than 1.3.
C: Image OD is less than 0.8.

### Scratching Resistance

The image was scratched 5 times with silbon paper on which a pressure of 40 g/cm² was applied to visually observe image disturbances, and evaluated according to the following standards.
A: Scratching causes no image disturbance or stain on the blank portion.
B: Scratching causes image disturbances or stain on the blank portion, but not to a bothering extent.
C: Scratching causes significant image disturbances or stain on the blank portion

### Marker Resistance.

The image was traced once by a fluorescent, yellow marking pen (ZEBRA's OPTEX) to visually observe image disturbances, and evaluated according to the following standards.
A: Tracing causes no image disturbance.
B: Tracing causes image disturbances to only a limited extent, little staining the pen edge.
C: Tracing causes significant image disturbances, coloring the pen edge.

### Storage Stability for Extended Periods

Storage stability for extended periods was visually observed after each ink sample put in a closed glass bottle was allowed to stand at room temperature for 1 month. It was evaluated according to the following standards.
A: No agglomeration or precipitation of the solids is observed.
B: Precipitation of the solids is observed to some extent, but the ink is returned back to the original dispersed condition when shaken slightly.
C: Agglomeration or precipitation of the solids is observed, and the ink is not returned back to the original dispersed condition when shaken slightly. Ejection stability

A specific black text was recorded on the total of 100 sheets to evaluate ejection stability by visually observing the first and last recorded sheet according to the following standards:
A: No line, uneven image or the like is observed, and no image difference is observed between the first and last sheet.
B: The image can be produced without problems, although one or more lines, or uneven or twisted images are observed slightly.
C: The image is deteriorated significantly, or printing is impossible.

The dispersible colorant prepared in each of EXAMPLES 1 to 10 produced good results, indicating that it was stably dispersed, as shown in Table 1. The recording ink prepared in each EXAMPLE also exhibited excellent recording characteristics, although the one prepared in EXAMPLE 5 incorporated with the dispersible colorant 5 having a lower surface functional group density and lower ζ potential in the ink was slightly inferior to the others in storage stability for extended periods and ejection stability, as shown in Table 2. Viewed from scratching resistance, the recording ink prepared in EXAMPLE 3 incorporated further with the fine, self-dispersible resin particles B exhibited higher resistance than the recording ink 1, although the dispersible colorant was synthesized from the same monomer species for these colorants.

**Table 1:**

| Properties of the dispersible colorants 1 to 10, and their evaluation results | | | | | | | | | | |
|---|---|---|---|---|---|---|---|---|---|---|
| | Dispersible colorant 1 | Dispersible colorant 2 | Dispersible colorant 3 | Dispersible colorant 4 | Dispersible colorant 5 | Dispersible colorant 6 | Dispersible colorant 7 | Dispersible colorant 8 | Dispersible colorant 9 | Dispersible colorant 10 |
| Colorant | BP880 | BP880 | BP880 | BP880 | BP880 | BP880 | BP880 | PB15:3 | PY180 | PR122 |
| Acid value of dispersant | 170 | 170 | 170 | 170 | 170 | 170 | Cationic (amine value 170) | 170 | 170 | 170 |
| Starting monomer species | MMA AAc | St AAc | MMA AAc | BzMA BA AAc | BA | MMA NaSS | BzMA DMAEA | MMA AAc | MMA AAc | MMA AAc |
| Monomer charging ratio | | | | 4.5 | | | | | | |
| | 5.5 | 5.7 | 5.7 | 1.2 | 6 | 17.2 | 4.2 | 5.7 | 5.7 | 5.7 |
| | 0.5 | 0.3 | 0.3 | 0.3 | | 0.8 | 1.8 | 0.3 | 0.3 | 0.3 |
| Total monomer content | 6 | 6 | 6 | 6 | 6 | 18 | 6 | 6 | 6 | 6 |
| Polymeriza tion initiator | KPS | KPS | KPS | KPS | KPS/NaTS | KPS | V-50 | KPS | KPS | VA-057 |
| Observed results | ○ | ○ | ○ | ○ | ○ | ○ | ○ | ○ | ○ | ○ |
| Presence mode of the fine resin particles | ○ | ○ | ○ | ○ | ○ | ○ | ○ | ○ | ○ | ○ |
| Dispersion stability | ○ | ○ | ○ | ○ | ○ | ○ | ○ | ○ | ○ | ○ |
| Average dispersed particle diameter [nm] | 126 | 118 | 123 | 134 | 121 | 135 | 130 | 121 | 141 | 101 |
| Tg[°C] | 105 | 110 | 105 | 30 | -15 | 115 | 95 | 105 | 105 | 105 |
| Surface functional group density [µmols/g] | 370 | 290 | 342 | 321 | 87 | 274 | 272 | 286 | 292 | 261 |
| Surface energy [mJ/m²] | 45.8 | 40.2 | 45.2 | 32.7 | 22.5 | 46.5 | 38.5 | 43.7 | 46.8 | 44.1 |
| Storage stability for extended periods | A | A | A | A | B | A | A | A | A | A |
| MMA: methyl methacrylate, AAc: acrylic acid, St: styrene | | | | | | | | | | |
| BzMA: benzyl methacrylate, BA: butyl acrylate, NaTS: sodium thiosulfate | | | | | | | | | | |
| NaSS: sodium p-styrenesulfonate | | | | | | | | | | |
| DMAEA: dimethylaminoethyl acrylate | | | | | | | | | | |

**Table 2:**

| Properties of the recording inks 1 to 10, and their recording characteristic evaluation results | | | | | | | | | | |
|---|---|---|---|---|---|---|---|---|---|---|
| | Recording ink 1 | Recording ink 2 | Recording ink 3 | Recording ink 4 | Recording ink 5 | Recording ink 6 | Recording ink 7 | Recording ink 8 | Recording ink 9 | Recording ink 10 |
| Dispersible colorant | 1 | 2 | 3 | 4 | 5 | 6 | 7 | 8 | 9 | 10 |
| Starting monomer species | MMA AAc | St AAc | MMA AAc | BzMA BA AAc | BA BA | MMA NaSS | BzMA DMAEA | MMA AAc | MMA AAc | MMA AAc |
| Presence mode of the fine resin particles | ○ | ○ | ○ | ○ | ○ | ○ | ○ | ○ | ○ | ○ |
| Fine resin particles B | - | - | MMA AAc | BzMA BA AAc | - | - | - | - | - | - |
| Tg[°C] | 105 | 110 | 105 | 30 | -15 | 115 | 95 | 105 | 105 | 105 |
| Resin/pigm ent (B/P) ratio | 0.2 | 0.2 | 0.5 | 0.5 | 0.4 | 0.8 | 0.4 | 0.3 | 0.4 | 0.3 |
| ζ potential [mV] | -30 | -25 | -28 | -26 | -12 | -31 | 18 | -28 | -30 | -26 |
| Standard deviation of ζ potential | 35 | 37 | 35 | 38 | 25 | 33 | 42 | 32 | 28 | 25 |
| Surface energy [mJ/m²] | 45.8 | 40.2 | 45.2 | 32.7 | 22.5 | 46.5 | 38.5 | 43.7 | 46.8 | 44.1 |
| Image optical density (OD) | A | A | A | A | A | A | A | A | A | A |
| Scratching resistance | B | B | A | A | A | A | A | A | A | A |
| Marker resistance | A | A | A | A | A | A | A | A | A | A |
| Storage stability for extended periods | A | A | A | A | B | A | A | A | A | A |
| Ejection stability | A | A | A | A | B | A | B | A | A | A |
| MMA: methyl methacrylate, AAc: acrylic acid, St: styrene | | | | | | | | | | |
| BzMA: benzyl methacrylate, BA: butyl acrylate | | | | | | | | | | |
| NaSS: sodium p-styrenesulfonate | | | | | | | | | | |
| DMAEA: dimethylaminoethyl acrylate | | | | | | | | | | |

### EXAMPLE 11

The following mixed solution was slowly dropped in 100 parts of the pigment dispersion solution 1 prepared in EXAMPLE 1 with electrically stirring at 70°C in a nitrogen atmosphere for polymerization continued for 5 hours. The mixed solution comprised 4.28 parts of styrene, 1.42 parts of hydroxyethyl methacrylate, 0.3 parts of acrylic acid, 0.07 parts of potassium hydroxide, 0.05 parts of potassium persulfate and 20 parts of water. The resulting dispersion solution was diluted 10 times with water, and centrifugally treated at 5,000 rpm for 10 minutes to remove the agglomerates. It was further centrifugally purified at 12,500 rpm for 2 hours to produce the precipitate as a dispersible colorant 11. The recording ink 11 containing the dispersible colorant 11 at 4% was prepared, where the colorant 11 was filtered and compounded with the composition in the same manner as in EXAMPLE 1.

### EXAMPLE 12

The following mixed solution was slowly dropped in 100 parts of the pigment dispersion solution 1 prepared in EXAMPLE 1 with electrically stirring at 70°C in a nitrogen atmosphere for polymerization continued for 5 hours. The mixed solution comprised 45.6 parts of ethyl methacrylate, 2.4 parts of acrylic acid, 0.6 parts of potassium hydroxide, 0.1 parts of potassium persulfate and 20 parts of water. The resulting polymerization mixture was centrifugally purified in the same manner as in EXAMPLE 9 to prepare a dispersible colorant 12. A recording ink 12 containing the dispersible colorant 12 at 4% was prepared, where the colorant 12 was filtered and compounded with the composition in the same manner as in EXAMPLE 1.

### EXAMPLE 13

The following mixed solution was slowly dropped in 100 parts of the pigment dispersion solution 1 prepared in EXAMPLE 1 with electrically stirring at 70°C in a nitrogen atmosphere for polymerization continued for 5 hours. The mixed solution comprised 5.7 parts of benzyl methacrylate, 0.3 parts of Mthacrylic acid, 0.07 parts of potassium hydroxide, 0.01 parts of potassium persulfate and 20 parts of water. The resulting polymerization mixture was centrifugally purified in the same manner as in EXAMPLE 1 to produce the precipitate as the dispersible colorant 13. The recording ink 13 containing the dispersible colorant 13 at 4% was prepared, where the colorant 13 was filtered and compounded with the composition in the same manner as in EXAMPLE 1.

### EXAMPLE 14

The following mixed solution was slowly dropped in 100 parts of the pigment dispersion solution 1 prepared in EXAMPLE 1 with electrically stirring at 70°C in a nitrogen atmosphere for polymerization continued for 7 hours. The mixed solution comprised 10 parts of methyl methacrylate, 8 parts of acrylic acid, 1.9 parts of potassium hydroxide, 0.05 parts of potassium persulfate and 20 parts of water. The resulting polymerization mixture was centrifugally purified in the same manner as in EXAMPLE 1 to produce the precipitate as a dispersible colorant 14. A recording ink 14 containing the dispersible colorant 14 at 4% was prepared, where the colorant 14 was filtered and compounded with the composition in the same manner as in EXAMPLE 1.

### EXAMPLE 15

The following mixed solution was slowly dropped in 100 parts of the pigment dispersion solution 1 prepared in EXAMPLE 1 with electrically stirring at 70°C in a nitrogen atmosphere for polymerization continued for 5 hours. The mixed solution comprised 4.5 parts of benzyl methacrylate, 1.2 parts of butyl acrylate, 0.3 parts of acrylic acid, 0.07 parts of potassium hydroxide, 0.05 parts of potassium persulfate and 20 parts of water. The resulting polymerization mixture was centrifugally purified in the same manner as in EXAMPLE 1 to prepare a dispersible colorant 15.

The polymerization was carried out in the same manner as in EXAMPLE 1, except that 100 parts of the pigment dispersion solution 1 was replaced by 100 parts of a 2% aqueous solution of potassium hydroxide in an amount equivalent to the styrene/acrylic resin-based dispersant used in EXAMPLE 1 the polymerization mixture was centrifugally purified in the same manner as in EXAMPLE 1, except at 20,000 rpm for 1 hour, to prepare the fine resin particles B3.

A recording ink 15 containing the dispersible colorant 15 and fine resin particles B3 at 4% and 19.2%, respectively, was prepared in the same manner as in EXAMPLE 1.

### Properties of Recording Inks and Their Evaluation Results

The dispersible colorant prepared in each of EXAMPLES 11 to 15 was observed by various procedures and analyzed for its properties in the same manner as in EXAMPLES 1 to 10. The results are given in Table 3, where St: styrene, HEMA: hydroxyethyl methacrylate, AAc: acrylic acid, EMA: ethyl methacrylate, MAc: methacrylic acid, BzMA: benzyl methacrylate, MMA: methyl methacrylate, BA: butyl acrylate and KPS: potassium persulfate.

The recording characteristics of the recording ink prepared in each of EXAMPLES 11 to 15 were also evaluated for the items covered by those prepared in EXAMPLES 1 to 10. Moreover, they were evaluated for the following additional recording characteristic items.

### Quick Drying Capacity

The image was produced with each ink in the same manner as in EXAMPLES 1 to 10, and scratched by a finger one minute after the recording was completed, to evaluate the ink for stain according to the following standards.
A: Essentially no stain is observed on the blank portion.
B: The blank portion is stained slightly, but causing no problem for recognizing the letters.
C: The letters are disturbed, and blank portion is clearly stained.

### Water Resistance

The recording medium printed with the black text image in the same manner as in EXAMPLES 1 to 10 was slanted at 45° from the horizontal plane with the recorded side up, onto which 1 mL of water was dropped from a height of 20 cm from a syringe, to observe extent of bleeding of the image. Its water resistance was evaluated according to the following standards.
A: Essentially no bleeding of the image is observed.
B: Bleeding of the image is observed slightly, but essentially no trace is observed on the blank portion.
C: A color bleeds out of the image to leave traces on the blank portion.
The results are given in Table 4.

Table 4 summarizes the composition, properties and evaluation results of the ink prepared in each of EXAMPLES 11 to 15.

As shown in Table 4, good results were observed with each ink, confirming that it was incorporated with the self-dispersible colorant. However, the ink prepared in EXAMPLE 13 contained the resin particles agglomerating on the pigment surface more than the others and distributed less uniformly. Each recording ink exhibited excellent recording characteristics. However, the one prepared in EXAMPLE 11 having a higher surface energy than the others was slightly inferior to the others in quick drying capacity and water resistance. The ink prepared in EXAMPLE 13 with fine resin particles distributed less uniformly than the others was slightly inferior to the others in image density, quick drying capacity and ejection stability. The ink prepared in EXAMPLE 14 having a higher surface functional group density was inferior to the others slightly in marker resistance and, more notably, in water resistance, although sufficient image density and ejection stability are obtained. On the other hand, the one prepared in EXAMPLE 15 having a higher B/P ratio than the others was slightly inferior to the others in ejection stability, because it sometimes caused twisted images during the initial stage of eject and high-speed recording, conceivably resulting from increased viscosity of the ink to deteriorate response to high-speed eject.

**Table 3:**

| Compositions and properties of the dispersible colorants 11 to 15, and their evaluation results | | | | | |
|---|---|---|---|---|---|
| | Dispersible colorant 11 | Dispersible colorant 12 | Dispersible colorant 13 | Dispersible colorant 14 | Dispersible colorant 15 |
| Colorant | BP880 | BP880 | BP880 | BP880 | BP880 |
| Acid value of dispersant | 170 | 170 | 170 | 170 | 170 |
| Starting monomer species | St HEMA AAc | EMA MAc | BzMA AAc | MMA AAc | Bz MA BA AAc |
| Monomer charging ratio | 4.28 | | | | 4.5 |
| | 1.42 | 45.6 | 5.7 | 10 | 1.2 |
| | 0.3 | 2.4 | 0.3 | 8 | 0.3 |
| Total monomer content | 6 | 48 | 6 | 18 | 6 |
| Polymerization initiator | KPS | KPS | KPS | KPS | KPS |
| Observed results | ○ | ○ | ○ | ○ | ○ |
| Presence mode of the fine resin particles | ○ | ○ | × | ○ | ○ |
| Dispersion stability | ○ | ○ | ○ | ○ | ○ |
| Fine resin particles B | - | - | - | - | BzMA BA AAc |
| Average dispersed particle diameter [nm] | 122 | 170 | 320 | 152 | 134 |
| Tg [°C] | 60 | 45 | 108 | 102 | 30 |
| Surface functional group density [µmols/g] | 275 | 302 | 180 | 1086 | 321 |
| Surface energy [mJ/m²] | 82.7 82.7 | 47.2 47.2 | 45.5 45.5 | 92.5 92.5 | 32.7 32.7 |
| Storage stability for extended periods | A | A | A | A | A |
| St: styrene, HEMA: hydroxyethyl methacrylate, AAc: acrylic acid, KPS: potassium persulfate | | | | | |
| EMA: ethyl methacrylate, MAc: methacrylic acid, BzMA: benzyl methacrylate | | | | | |
| MMA: methyl methacrylate and BA: butyl acrylate | | | | | |

**Table 4:**

| Properties of the recording inks 11 to 15, and their recording characteristic evaluation results | | | | | |
|---|---|---|---|---|---|
| | Recording ink 11 | Recording ink 12 | Recording ink 13 | Recording ink 14 | Recording ink 15 |
| Dispersible colorant | 11 | 12 | 13 | 14 | 15 |
| Starting monomer species | St HEMA AAc | EMA MAc | BzMA AAc | MMA AAc | BzMA BA AAc |
| Fine resin particles B | - | - | - | - | BzMA BA AAc |
| Presence mode of the fine resin particles | ○ | ○ | × | ○ | ○ |
| Tg [°C] | 60 | 45 | 108 | 102 | 30 |
| Resin/pigment (B/P) ratio | 0.3 | 1.5 | 1.2 | 0.4 | 5.1 |
| ζ potential [mV] | -27 | -26 | -27 | -90 | -26 |
| Standard deviation of ζ potential | 33 | 32 | 72 | 45 | 38 |
| Surface functional group density [µmols/g] | 275 | 302 | 180 | 1086 | 321 |
| Surface energy [mJ/m²] | 82.7 | 47.2 | 45.5 | 92.5 | 32.7 |
| Image optical density (OD) | A | A | B | A | B |
| Scratching resistance | A | A | A | B | A |
| Marker resistance | A | A | A | B | A |
| Storage stability for extended periods | A | A | B | A | B |
| Quick drying capacity | B | A | B | A | A |
| Water resistance | A | A | A | C | A |
| Ejection stability | A | A | B | A | C |
| St: styrene, HEMA: hydroxyethyl methacrylate, AAc: acrylic acid | | | | | |
| EMA: ethyl methacrylate, MAc: methacrylic acid, BzMA: benzyl methacrylate | | | | | |
| MMA: methyl methacrylate and BA: butyl acrylate | | | | | |

### COMPARATIVE EXAMPLE 1

A comparative ink 1 containing a pigment at 4% was prepared in the same manner as in EXAMPLE 1, where the dispersion solution 1 prepared in EXAMPLE 1 was used for the pigment. The comparative ink 1, observed in the same manner as in EXAMPLE 1, showed no fine resin particles fast fixing to the colorant.

### COMPARATIVE EXAMPLE 2

A comparative ink 2 was prepared in the same manner as in EXAMPLE 1, except that a surface-treated, self-dispersible carbon black (Cabot's Cabojet 200) was incorporated at a 4% solid content and the fine resin particles B1 prepared in EXAMPLE 3 were incorporated at 1.6%. The comparative ink 2, observed in the same manner as in EXAMPLE 1, showed the fine resin particles fixing to the colorant in places. However, distribution of fixation of these particles was not uniform, and some agglomerated with each other.

The colorant prepared in each of COMPARATIVE EXAMPLES 1 and 2 was observed by various procedures and analyzed for its properties in the same manner as in EXAMPLES 1 to 15. The results are given in Table 5. The recording ink prepared in each of COMPARATIVE EXAMPLES 1 and 2 was evaluated in the same manner as in EXAMPLES 9 to 15. The results are given in Table 6.

The colorant prepared in each of COMPARATIVE EXAMPLES 1 and 2 was observed by various procedures and analyzed for its properties in the same manner as in EXAMPLES 1 to 13. The results are given in Table 5. The comparative recording ink prepared in each of COMPARATIVE EXAMPLES 1 and 2 was evaluated in the same manner as in EXAMPLES 9 to 13. The results are given in Table 6.

The ink prepared in each of COMPARATIVE EXAMPLES 1 and 2 was observed to be significantly inferior to the ink of the present invention prepared in each EXAMPLE, in particular in image density, storage stability for extended periods and ejection stability. The one prepared in COMPARATIVE EXAMPLE 2 was significantly inferior to the ink of the present invention in scratching resistance, water resistance and quick drying capacity, because the colorant, although self-dispersible, failed to allow the fine resin particles to sufficiently fix thereto.

**Table 5:**

| Properties of the colorants prepared in COMPARATIVE EXAMPLES 1 and 2, and their evaluation results | | |
|---|---|---|
| | COMPARATIVE EXAMPLE 1 | COMPARATIVE EXAMPLE 2 |
| Colorant | BP880 | Cabojet200 |
| Acid value of dispersant | 170 | - |
| Observed results | × | × |
| Presence mode of the fine resin particles | - | - |
| Dispersion stability | × | ○ |
| Fine resin particles B | - | MMA AAc |
| Average dispersed particle diameter [nm] | 98 | 102 |
| Tg [°C] | - | 105 |
| Surface functional group density [µmols/g] | - | 270 |
| Surface energy [mJ/m²] | - | - |
| Storage stability for extended periods | C | C |
| BzMA: benzyl methacrylate and AAc: acrylic acid | | |

**Table 6:**

| Properties of the recording inks prepared in comparative ink 1 and 2, and their recording characteristic evaluation results | | |
|---|---|---|
| | Comparative ink 1 | Comparative ink 2 |
| Colorant | COMPARATIVE EXAMPLE 1 | COMPARATIVE EXAMPLE 2 |
| Observed results | × | × |
| Presence mode of the fine resin particles | - | - |
| Fine resin particles B | - | MMA AAc |
| Tg [°C] | - | 105 |
| Resin/pigment (B/P) ratio | - | 0.4 |
| ζ potential [mV] | - | -25 |
| Standard deviation of ζ potential | - | 37 |
| Surface functional group density [µmols/g] | - | 270 |
| Surface energy [mJ/m²] | - | - |
| Image optical density (OD) | C | C |
| Scratching resistance | B | B |
| Marker resistance | B | C |
| Storage stability for extended periods | C | C |
| Quick drying capacity | B | C |
| Water resistance | C | C |
| Ejection stability | C | C |
| BzMA: benzyl methacrylate and AAc: acrylic acid | | |

Moreover, the recording inks prepared in EXAMPLES 1 to 4, 6, 12 and 15 were additionally evaluated by the following procedures, and the results are given in Table 7. Solid patches (5 cm square) were produced with the black ink prepared in each of EXAMPLES on a glossy paper for ink jet recording (Canon's PR-101) by the recorder used for the above evaluations, to observe the image density, scratching resistance and gloss on the glossy paper.

### Image density on the glossy paper

The image was observed one day after it was produced for optical density (OD), and evaluated according to the following standards.
A: Image OD is not less than 2.3.
B: Image OD is 1.7 or more and less than 2.3.
C: Image OD is less than 1.7.

### Scratching Resistance on Glossy Paper

The image was scratched 5 times with silbon paper on which a pressure of 40 g/cm² was applied to visually observe whether the image was scraped off, and evaluated according to the following standards.
A: The image is little scraped off, and the blank portion remains essentially stainless.
B: The image is scraped off, but at least 90% of the printed image is remaining.
C: The image is significantly scraped off.

### Image Gloss

The image was visually observed for gloss, and evaluated according to the following standards.
A: The image is essentially as glossy as the blank portion.
B: The image is sufficiently glossy, although showing more irregular reflection than the blank portion.
C: The image is not glossy, and shows little light reflection.

The ink prepared in EXAMPLE 2 containing styrene and that prepared in EXAMPLE 15 having a higher B/P ratio gave the image slightly lower in image density on the glossy paper than the others containing a methacrylic acid ester-based monomer. The ink prepared in EXAMPLES 4, 12 and 15 having a lower Tg value, and the one prepared in EXAMPLE 3 containing the fine resin particles B gave the image more excellent in scratching resistance on the glossy paper.

**Table 7:**

| Compositions and properties of the recording inks prepared in EXAMPLES 1 to 4, 6, 12 and 15, and their evaluation results | | | | | | | |
|---|---|---|---|---|---|---|---|
| | EXAMPLE 1 | EXAMPLE 2 | EXAMPLE 3 | EXAMPLE 4 | EXAMPLE 6 | EXAMPLE 12 | EXAMPLE 15 |
| Dispersible colorant | 1 | 2 | 3 | 4 | 6 | 12 | 15 |
| Fine resin particles B | - | - | MMA AAc | BzMA BA AAc | - | - | BzMA BA AAc |
| Tg [°C] | 105 | 110 | 105 | 30 | 115 | 45 | 30 |
| Resin/pigme nt (B/P) ratio | 0.2 | .0.2 | 0.5 | 0.5 | 0.8 | 1.5 | 5.1 |
| Image density on the glossy paper | A | B | B | A | B | A | B |
| Scratching resistance on the glossy paper | B | B | A | A | B | A | A |
| Gloss | A | B | A | A | A | A | B |
| BzMA: benzyl methacrylate and AAc: acrylic acid | | | | | | | |

### INDUSTRIAL FIELD OF APPLICATION

The present invention provides a dispersible colorant sufficiently high in dispersion stability, showing no separation from a colorant of resin component and stable for extended periods, and a method for simply producing the same. The present invention also provides an aqueous ink containing the excellent, dispersible colorant, ink tank, ink jet recorder, ink jet recording method and inkjet recorded images. Another advantage of the present invention is to provide the dispersible colorant excellent in quick drying capacity on a recording medium. Still another advantage is the dispersible colorant high in scratching resistance on a recording medium. Still another advantage is to provide the dispersible colorant high in eject characteristics in an ink jet recorder. Still another advantage is to provide the dispersible colorant excellent in color-developing capacity on a recording medium. Still another advantage is to provide the dispersible colorant stably serviceable in a high to medium pH range or medium to low pH range. The method of the present invention can simply produce the dispersible colorant having the above advantages. Still another advantage is to provide the aqueous recording ink which can give a highly glossy image on a glossy recording medium. Still another advantage is to provide the aqueous recording ink excellent in scratching resistance on a glossy recording medium. Still another advantage is to provide the aqueous recording ink excellent in storage stability for extended periods.

## Claims

1. A dispersible colorant comprising a colorant and chargeable resin pseudo fine particles having a smaller size than the colorant, wherein the colorant and particles fix to each other.

2. A dispersible colorant comprising a colorant and chargeable resin pseudo fine particles having a smaller size than the colorant, wherein a plurality of the particles are distributed on and fix to the colorant.

3. The dispersible colorant according to claim 1 or 2 which has a surface functional group density of not less than 250 µmols/g and less than 1000 µmols/g.

4. The dispersible colorant according to any one of claims 1 to 3 which has a surface energy of 70 mJ/m² or less.

5. The dispersible colorant according to any one of claims 1 to 4, wherein a copolymer component composing the chargeable resin pseudo fine particles has a glass transition temperature of not less than - 40°C and not more than 60°C.

6. The dispersible colorant according to any one of claims 1 to 5, wherein the chargeable resin pseudo fine particles contain a copolymer of monomer components containing at least one type of hydrophobic monomer and at least one type of hydrophilic monomer.

7. The dispersible colorant according to claim 6, wherein the hydrophobic monomer contains at least a monomer having a methyl group at the α position and a radically polymerizable, unsaturated double bond.

8. The dispersible colorant according to claim 6 or 7, wherein the hydrophobic monomer contains at least a (meth)acrylic ester compound.

9. The dispersible colorant according to claim 8, wherein the hydrophobic monomer contains at least one compound selected from the group consisting of benzyl methacrylate and methyl methacrylate.

10. The dispersible colorant according to any one of claims 6 to 9, wherein the hydrophilic monomer contains at least an anionic monomer.

11. The dispersible colorant according to claim 10, wherein the anionic monomer contains at least one compound selected from the group consisting of acrylic acid, methacrylic acid and p-styrene sulfonate salts.

12. The colorant according to any one of claims 6 to 9, wherein at least a cationic monomer is contained as the hydrophilic monomer.

13. A method for producing a dispersible colorant, comprising the step of conducting an aqueous deposition polymerization process of a radically polymerizable monomer in an aqueous dispersion of a water-insoluble colorant using an aqueous radical-polymerization initiator to integrate the water-insoluble colorant with chargeable resin pseudo fine particles.

14. A method for producing a dispersible colorant, comprising the steps of (1) conducting an aqueous deposition polymerization process of a radically polymerizable polymer in an aqueous dispersion of a water-insoluble colorant using an aqueous radical-polymerization initiator to integrate the water-insoluble colorant with chargeable resin pseudo fine particles; and
(2) purifying the product.

15. The method for producing a dispersible colorant according to claim 13 or 14, wherein the aqueous dispersion of water-insoluble colorant is an aqueous solution containing a pigment dispersed with a polymeric dispersant having an acid value of not less than 100 and not more than 250.

16. The method for producing a dispersible colorant according to claim 15, wherein the dispersant is a copolymer of monomer components containing at least one type of monomer selected from the group consisting of acrylic acid, and methacrylic acid and a styrene monomer.

17. The method for producing a dispersible colorant according to claim 15 or 16, wherein the aqueous radical-polymerization initiator is anionic or ampholytic.

18. The method for producing a dispersible colorant according to claim 13 or 14, wherein the aqueous dispersion of the water-insoluble colorant is an aqueous solution containing a pigment dispersed with a polymeric dispersant having an amine value of not less than 150 and not more than 300.

19. The method for producing a dispersible colorant according to claim 18, wherein the aqueous radical-polymerization initiator is cationic or ampholytic.

20. The method for producing a dispersible colorant according to any one of claims 13 to 19, wherein the radically polymerizable monomer component is dropped in the polymerization system.

21. The method for producing a dispersible colorant according to any one of claims 13 to 20, wherein the radically polymerizable monomer component contains at least one type of hydrophobic monomer and at least one type of hydrophilic monomer.

22. The method for producing a dispersible colorant according to any one of claims 13 to 21, wherein the radical-polymerization initiator is an aqueous azo-based polymerization initiator.

23. A dispersible colorant produced by the method according to any one of claims 13 to 22.

24. An aqueous ink containing the dispersible colorant according to any one of claims 1 to 12 and 23.

25. An aqueous ink containing a dispersible colorant comprising a colorant and chargeable resin pseudo fine particles having a smaller size than the colorant, wherein the colorant and particles fix to each other, and at least one type of self-dispersible resin fine particles are additionally contained.

26. The aqueous ink according to claim 25, wherein the resin component which constitutes the pseudo-fine, chargeable particles and the resin component which constitutes the at least one type of self-dispersible resin fine particles contain a polymerization product of a mixture containing at least one type of common monomer component.

27. The aqueous ink according to claim 26, wherein the resin component which constitutes at least one type of the pseudo-fine, chargeable particles and the resin component which constitutes the at least one type of self-dispersible resin fine particles contain a polymerization product of a mixture containing at least one type of common monomer component.

28. An aqueous ink containing a dispersible colorant comprising a colorant and negatively chargeable resin pseudo fine particles having a smaller size than the colorant, wherein the colorant and the particles fix to each other, and the dispersible colorant has an average surface zeta potential of not less than -80 mV and not more than -15 mV in an aqueous medium which compose the aqueous ink and a surface zeta potential distribution of less than 50 in terms of the standard deviation.

29. An aqueous ink containing a dispersible colorant comprising a colorant and pseudo-fine, positively chargeable particles of resin having a smaller size than the colorant, wherein the colorant and the particles fix to each other, and the dispersible colorant has an average surface zeta potential of not less than +10 mV and not more than +60 mV in an aqueous medium which composes the aqueous ink and a surface zeta potential distribution of less than 50 in terms of the standard deviation.

30. The aqueous ink according to any one of claims 24 to 29, wherein the colorant which composes the dispersible colorant is a pigment, and the ratio of the total resin components to the pigment (resin/pigment or B/P by mass) of not less than 0.3 and not more than 4.0.

31. An ink tank which contains the aqueous ink according to any one of claims 24 to 30.

32. An ink jet recorder for forming images with the ink according to any one of claims 24 to 30.

33. An ink jet recording method for forming images with the aqueous ink according to any one of claims 24 to 30 by an ink jet recorder.

34. An image formed by ink jet recording with the aqueous ink according to any one of claims 24 to 30 using an ink jet recorder.
